# EUROPEAN PATENT APPLICATION

(11) **EP 4 804 604 A1**
(43) Date of publication of application: **09.09.2026**
(21) Application number: 24902548.7
(22) Date of filing: 26.11.2024
(51) Int. Cl.: H04W 24/08

(54) **BEAM MEASUREMENT METHOD AND APPARATUS**

(30) Priority: 13.12.2023 CN 202311718331
(71) Applicant: Huawei Technologies Co., Ltd., Shenzhen, Guangdong 518129 (CN)
(72) Inventor: ZHANG, Xi, Shenzhen, Guangdong 518129 (CN); BI, Xiaoyan, Shenzhen, Guangdong 518129 (CN); MA, Jianglei, Shenzhen, Guangdong 518129 (CN); TONG, Wen, Shenzhen, Guangdong 518129 (CN)
(74) Representative: Huawei European IPR
(86) International application number: PCT/CN2024/134459
(87) International publication number: WO 2025/124126

(57) **Abstract**

Embodiments of this application provide a beam measurement method and an apparatus. The method includes: receiving indication information, where the indication information indicates at least one beam group among a plurality of beam groups, and a plurality of beams used for beam measurement are divided into the plurality of beam groups; receiving a reference signal transmitted by using the at least one beam group, where the reference signal is used to determine measurement feedback information; and sending the measurement feedback information. According to the beam measurement method and apparatus provided in embodiments of this application, overheads of a terminal device can be reduced.

## Description

This application claims priority to Chinese Patent Application No. 202311718331.4, filed with the China National Intellectual Property Administration on December 13, 2023 and entitled "BEAM MEASUREMENT METHOD AND APPARATUS", which is incorporated herein by reference in its entirety.

### TECHNICAL FIELD

Embodiments of this application relate to the communication field, and more specifically, to a beam measurement method and an apparatus.

### BACKGROUND

A network device and a terminal device need to perform beam alignment for subsequent data transmission. Beam alignment between the terminal device and the network device may be implemented through information exchange between the terminal device and the network device. To ensure a beam-aligned state between the network device and the terminal device, information exchange between the terminal device and the network device is typically performed continuously.

In a process of information exchange between the terminal device and the network device, the network device configures beams used for beam measurement and a reporting quantity, the terminal device selects and reports measurement feedback information based on a measurement result, and the terminal device calculates a full set of beams used for beam measurement, resulting in high system overheads. Therefore, how to reduce system overheads of a beam measurement process is an urgent problem to be resolved in the art.

### SUMMARY

Embodiments of this application provide a beam measurement method and an apparatus, to reduce system overheads of a beam measurement process.

According to a first aspect, a beam measurement method is provided. The method includes: receiving indication information, where the indication information indicates at least one beam group among a plurality of beam groups, and a plurality of beams used for beam measurement are divided into the plurality of beam groups; receiving a reference signal transmitted by using the at least one beam group, where the reference signal is used to determine measurement feedback information; and sending the measurement feedback information.

According to the method provided in this embodiment of this application, a terminal device receives the indication information, to select some beams from the plurality of beams used for beam measurement, to perform beam measurement. This reduces a quantity of beams measured by the terminal device, and reduces overheads used by the terminal device for measurement. In addition, the terminal device determines, based on an indication from a network device, to perform beam measurement by using which beams, thereby improving system controllability.

With reference to the first aspect, in some implementations of the first aspect, the method further includes: receiving configuration information, where the configuration information includes beam measurement set information and/or beam grouping information, the beam measurement set information indicates the plurality of beams used for beam measurement, and the beam grouping information indicates group numbers of the plurality of beam groups.

According to the method provided in this embodiment of this application, the terminal device receives the beam measurement set information and/or the beam grouping information, to determine a beam grouping status, so as to efficiently perform beam measurement with low overheads in combination with the received indication information.

With reference to the first aspect, in some implementations of the first aspect, the at least one beam group includes a first beam group and a second beam group, where the first beam group is used to measure signal strength, and the second beam group is used to measure interference strength.

Specifically, the terminal may select a serving beam from the first beam group, select a paired beam from the second beam group, measure signal strength by using the selected serving beam, measure interference strength by using the selected paired beam, and calculate beam quality information in the measurement feedback information by using the signal strength and the interference strength. For example, the terminal device calculates a signal to interference plus noise ratio of a combination of the currently selected serving beam and paired beam by using the signal strength and the interference strength.

Further, the measurement feedback information may include a number of a serving beam used by the terminal device when performing beam measurement, a number of a paired beam selected for pairing with the serving beam, and a signal to interference plus noise ratio correspondingly calculated by using a combination of the serving beam and the paired beam. The measurement feedback information may include one or more beam pairs and signal to interference plus noise ratios corresponding to the beam pairs.

According to the method provided in this embodiment of this application, the terminal device receives the indication information and determines the first beam group and the second beam group used for signal strength measurement, so that the terminal device can pair a plurality of channel measurement resources with interference measurement resources in real time, thereby reducing a quantity of beams measured by the terminal device, and reducing overheads used by the terminal device for measurement.

With reference to the first aspect, in some implementations of the first aspect, the indication information is transmitted by using media access control-control element signaling or downlink control information signaling.

With reference to the first aspect, in some implementations of the first aspect, the indication information indicates a group number of the first beam group and a group number of the second beam group.

According to the method provided in this embodiment of this application, the terminal device determines, based on beam group numbers, beam groups used for measurement and interference, so that signaling overheads can be reduced. In addition, because the first beam group and the second beam group are dynamically indicated by using the indication information, instead of being determined by the terminal device itself, system adaptability is improved.

With reference to the first aspect, in some implementations of the first aspect, the configuration information further includes beam angle information, and the beam angle information includes a zenith angle and/or an azimuth angle of each beam; and beams in each of the plurality of beam groups have a same zenith angle range and/or a same azimuth angle range.

According to the method provided in this embodiment of this application, beams, among the plurality of beams used for beam measurement, that are adjacent in spatial domain are divided into a same beam group, so that beams in the same beam group have similar spatial domain characteristics. This helps the terminal device extract and use the spatial domain characteristics during measurement, and determine locations of the first beam group and the second beam group in combination with the indication information.

With reference to the first aspect, in some implementations of the first aspect, the indication information indicates a group number of the first beam group and a beam-angle difference threshold; and the method further includes: determining the second beam group based on the first beam group, a beam-angle difference threshold, and the beam angle information.

With reference to the first aspect, in some implementations of the first aspect, determining the second beam group based on the first beam group, the beam-angle difference threshold, and the beam angle information includes: determining, as the second beam group, a beam group, among the plurality of beam groups, whose angle difference from the first beam group is greater than the beam-angle difference threshold.

With reference to the first aspect, in some implementations of the first aspect, the angle difference includes an angle difference between an angle center of the first beam group and an angle center of the second beam group; and the angle center of the first beam group or the angle center of the second beam group is obtained by calculating an arithmetic mean, a geometric mean, a harmonic mean, a square mean, or a moving average of angles of beams in the first beam group or the second beam group.

According to the method provided in this embodiment of this application, the terminal device determines the group number of the second beam group based on the received group number of the first beam group and the angle difference threshold, and then performs measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

With reference to the first aspect, in some implementations of the first aspect, the configuration information further includes spatial domain grid information, and the spatial domain grid information indicates a coverage area range of each beam mapped onto the ground; and beams in each of the plurality of beam groups have adjacent coverage area ranges.

According to the method provided in this embodiment of this application, beams, among the plurality of beams used for beam measurement, that are adjacent in coverage area are divided into a same beam group, so that beams in the same beam group have similar coverage area characteristics. This helps the terminal device extract and use the coverage area characteristics during measurement, and determine locations of the first beam group and the second beam group in combination with the indication information.

With reference to the first aspect, in some implementations of the first aspect, the indication information indicates a group number of the first beam group and a beam distance difference threshold; and the method further includes: determining the second beam group based on the first beam group, the beam distance difference threshold, and the spatial domain grid information.

With reference to the first aspect, in some implementations of the first aspect, determining the second beam group based on the first beam group, the beam distance difference threshold, and the spatial domain grid information includes: determining, as the second beam group, a beam group, among the plurality of beam groups, whose distance difference from the first beam group is greater than the beam distance difference threshold.

With reference to the first aspect, in some implementations of the first aspect, the distance difference includes a distance difference between a coverage area center of the first beam group and a coverage area center of the second beam group; and the coverage area center of the first beam group or the coverage area center of the second beam group is obtained by calculating an arithmetic mean, a geometric mean, a harmonic mean, a square mean, or a moving average of coverage areas of the first beam group or the second beam group.

According to the method provided in this embodiment of this application, the terminal device determines the group number of the second beam group based on the received group number of the first beam group and the distance difference threshold, and then performs measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

With reference to the first aspect, in some implementations of the first aspect, the spatial domain grid information includes coverage area update information; and the coverage area update information indicates a portion of a current coverage area of each beam mapped to the ground that changes relative to a previous coverage area of the beam mapped to the ground.

According to the method provided in this embodiment of this application, the spatial domain grid information is updated differentially, so that the spatial domain grid information can more accurately reflect coverage areas of different beams that are actually arranged on the ground. In addition, the spatial domain grid information transmits only a coverage area changed part determined based on an environment perception result, thereby avoiding sending repeated information and reducing signaling overheads.

With reference to the first aspect, in some implementations of the first aspect, the configuration information is transmitted by using radio resource control signaling, media access control-control element signaling, or broadcast.

With reference to the first aspect, in some implementations of the first aspect, the measurement feedback information further includes a group number of a beam group in which a reported beam is located and a beam number of the reported beam in the first beam group or the second beam group.

Specifically, the measurement feedback information may include a number of a serving beam, in a beam group corresponding to the serving beam, used by the terminal device when performing beam measurement and a signal-to-noise ratio measured by using the serving beam. The measurement feedback information may include one or more groups of beams and signal-to-noise ratios corresponding to the beams. Further, the measurement feedback information may alternatively include a number of a serving beam, in a beam group corresponding to the serving beam, used by the terminal device when performing beam measurement, a number of a paired beam, in a beam group corresponding to the paired beam, selected for pairing with the serving beam, and a signal to interference plus noise ratio correspondingly calculated by using a combination of the serving beam and the paired beam. The measurement feedback information may include one or more beam pairs and signal to interference plus noise ratios corresponding to the beam pairs.

According to the method provided in this embodiment of this application, an internal number of a beam group is used in the measurement feedback information reported by the terminal device, and the internal number occupies fewer bits than a global number of a beam in a beam measurement set during transmission, thereby reducing overheads used by the terminal device for reporting.

According to a second aspect, a beam measurement method is provided. The method includes: sending indication information, where the indication information indicates at least one beam group among a plurality of beam groups, and a plurality of beams used for beam measurement are divided into a plurality of beam groups; sending a reference signal by using the at least one beam group, where the reference signal is used to determine measurement feedback information; and receiving the measurement feedback information.

With reference to the second aspect, in some implementations of the second aspect, configuration information is sent, where the configuration information includes beam measurement set information and/or beam grouping information, the beam measurement set information indicates the plurality of beams used for beam measurement, and the beam grouping information indicates group numbers of the plurality of beam groups.

With reference to the second aspect, in some implementations of the second aspect, the at least one beam group includes a first beam group and a second beam group, where the first beam group is used to measure signal strength, and the second beam group is used to measure interference strength.

With reference to the second aspect, in some implementations of the second aspect, the indication information is transmitted by using media access control-control element signaling or downlink control information signaling.

With reference to the second aspect, in some implementations of the second aspect, the indication information indicates a group number of the first beam group and a group number of the second beam group.

With reference to the second aspect, in some implementations of the second aspect, the configuration information further includes beam angle information, and the beam angle information includes a zenith angle and/or an azimuth angle of each beam; and beams in each of the plurality of beam groups have a same zenith angle range and/or a same azimuth angle range.

With reference to the second aspect, in some implementations of the second aspect, the method further includes: determining the second beam group based on the first beam group, a beam-angle difference threshold, and the beam angle information.

With reference to the second aspect, in some implementations of the second aspect, determining the second beam group based on the first beam group, the beam-angle difference threshold, and the beam angle information includes: determining, as the second beam group, a beam group, among the plurality of beam groups, whose angle difference from the first beam group is greater than the beam-angle difference threshold.

With reference to the second aspect, in some implementations of the second aspect, the angle difference includes an angle difference between an angle center of the first beam group and an angle center of the second beam group; and the angle center of the first beam group or the angle center of the second beam group is obtained by calculating an arithmetic mean, a geometric mean, a harmonic mean, a square mean, or a moving average of angles of beams in the first beam group or the second beam group.

With reference to the second aspect, in some implementations of the second aspect, the configuration information further includes spatial domain grid information, and the spatial domain grid information indicates a coverage area range of each beam mapped onto the ground; and beams in each of the plurality of beam groups have adjacent coverage area ranges.

With reference to the second aspect, in some implementations of the second aspect, the second beam group is determined based on the first beam group, the beam distance difference threshold, and the spatial domain grid information.

With reference to the second aspect, in some implementations of the second aspect, determining the second beam group based on the first beam group, the beam distance difference threshold, and the spatial domain grid information includes: determining, as the second beam group, a beam group, among the plurality of beam groups, whose distance difference from the first beam group is greater than the beam distance difference threshold.

With reference to the second aspect, in some implementations of the second aspect, the distance difference includes a distance difference between a coverage area center of the first beam group and a coverage area center of the second beam group; and the coverage area center of the first beam group or the coverage area center of the second beam group is obtained by calculating an arithmetic mean, a geometric mean, a harmonic mean, a square mean, or a moving average of coverage areas of the first beam group or the second beam group.

According to the method provided in this embodiment of this application, a network device determines the group number of the second beam group based on the group number of the first beam group and the distance difference threshold, and indicates a terminal device to perform measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

With reference to the second aspect, in some implementations of the second aspect, the spatial domain grid information includes coverage area update information; and the coverage area update information indicates a portion of a current coverage area of each beam mapped to the ground that changes relative to a previous coverage area of the beam mapped to the ground.

With reference to the second aspect, in some implementations of the second aspect, the configuration information is transmitted by using radio resource control signaling, media access control-control element signaling, or broadcast.

With reference to the second aspect, in some implementations of the second aspect, the measurement feedback information includes a beam number of a reported beam in the first beam group or the second beam group.

According to a third aspect, a beam measurement apparatus is provided. The apparatus includes a transceiver unit, where the transceiver unit is configured to receive indication information, where the indication information indicates at least one beam group among a plurality of beam groups, and a plurality of beams used for beam measurement are divided into a plurality of beam groups; the transceiver unit is further configured to receive a reference signal transmitted by using the at least one beam group, where the reference signal is used to determine measurement feedback information; and the transceiver unit is further configured to send the measurement feedback information.

With reference to the third aspect, in some implementations of the third aspect, the transceiver unit is further configured to receive configuration information, where the configuration information includes beam measurement set information and/or beam grouping information, the beam measurement set information indicates the plurality of beams used for beam measurement, and the beam grouping information indicates group numbers of the plurality of beam groups.

With reference to the third aspect, in some implementations of the third aspect, the at least one beam group includes a first beam group and a second beam group, where the first beam group is used to measure signal strength, and the second beam group is used to measure interference strength.

With reference to the third aspect, in some implementations of the third aspect, the indication information is transmitted by using media access control-control element signaling or downlink control information signaling.

With reference to the third aspect, in some implementations of the third aspect, the indication information indicates a group number of the first beam group and a group number of the second beam group.

With reference to the third aspect, in some implementations of the third aspect, the configuration information further includes beam angle information, and the beam angle information includes a zenith angle and/or an azimuth angle of each beam; and beams in each of the plurality of beam groups have a same zenith angle range and/or a same azimuth angle range.

With reference to the third aspect, in some implementations of the third aspect, the indication information indicates a group number of the first beam group and a beam-angle difference threshold; and the apparatus further includes: determining the second beam group based on the first beam group, the beam-angle difference threshold, and the beam angle information.

With reference to the third aspect, in some implementations of the third aspect, the apparatus further includes a processing unit, and determining the second beam group based on the first beam group, the beam-angle difference threshold, and the beam angle information includes: The processing unit is configured to determine, as the second beam group, a beam group, among the plurality of beam groups, whose angle difference from the first beam group is greater than the beam-angle difference threshold.

With reference to the third aspect, in some implementations of the third aspect, the angle difference includes an angle difference between an angle center of the first beam group and an angle center of the second beam group; and the angle center of the first beam group or the angle center of the second beam group is obtained by calculating an arithmetic mean, a geometric mean, a harmonic mean, a square mean, or a moving average of angles of beams in the first beam group or the second beam group.

With reference to the third aspect, in some implementations of the third aspect, the configuration information further includes spatial domain grid information, and the spatial domain grid information indicates a coverage area range of each beam mapped onto the ground; and beams in each of the plurality of beam groups have adjacent coverage area ranges.

With reference to the third aspect, in some implementations of the third aspect, the indication information indicates a group number of the first beam group and a beam distance difference threshold; and the processing unit is configured to determine the second beam group based on the first beam group, the beam distance difference threshold, and the spatial domain grid information.

With reference to the third aspect, in some implementations of the third aspect, determining the second beam group based on the first beam group, the beam distance difference threshold, and the spatial domain grid information includes: The processing unit is configured to determine, as the second beam group, a beam group, among the plurality of beam groups, whose distance difference from the first beam group is greater than the beam distance difference threshold.

With reference to the third aspect, in some implementations of the third aspect, the distance difference includes a distance difference between a coverage area center of the first beam group and a coverage area center of the second beam group; and the coverage area center of the first beam group or the coverage area center of the second beam group is obtained by calculating an arithmetic mean, a geometric mean, a harmonic mean, a square mean, or a moving average of coverage areas of the first beam group or the second beam group.

With reference to the third aspect, in some implementations of the third aspect, the spatial domain grid information includes coverage area update information; and the coverage area update information indicates a portion of a current coverage area of each beam mapped to the ground that changes relative to a previous coverage area of the beam mapped to the ground.

With reference to the third aspect, in some implementations of the third aspect, the configuration information is transmitted by using radio resource control signaling, media access control-control element signaling, or broadcast.

With reference to the third aspect, in some implementations of the third aspect, the measurement feedback information further includes a group number of a beam group in which a reported beam is located and a beam number of the reported beam in the first beam group or the second beam group.

According to a fourth aspect, a beam measurement apparatus is provided. The apparatus includes a transceiver unit, where the transceiver unit is configured to send indication information, where the indication information indicates at least one beam group among a plurality of beam groups, and a plurality of beams used for beam measurement are divided into a plurality of beam groups; the transceiver unit is further configured to send a reference signal by using the at least one beam group, where the reference signal is used to determine measurement feedback information; and the transceiver unit is further configured to receive the measurement feedback information.

With reference to the fourth aspect, in some implementations of the fourth aspect, the transceiver unit is further configured to send configuration information, where the configuration information includes beam measurement set information and/or beam grouping information, the beam measurement set information indicates the plurality of beams used for beam measurement, and the beam grouping information indicates group numbers of the plurality of beam groups.

With reference to the fourth aspect, in some implementations of the fourth aspect, the at least one beam group includes a first beam group and a second beam group, where the first beam group is used to measure signal strength, and the second beam group is used to measure interference strength.

With reference to the fourth aspect, in some implementations of the fourth aspect, the indication information is transmitted by using media access control-control element signaling or downlink control information signaling.

With reference to the fourth aspect, in some implementations of the fourth aspect, the indication information indicates a group number of the first beam group and a group number of the second beam group.

With reference to the fourth aspect, in some implementations of the fourth aspect, the configuration information further includes beam angle information, and the beam angle information includes a zenith angle and/or an azimuth angle of each beam; and beams in each of the plurality of beam groups have a same zenith angle range and/or a same azimuth angle range.

With reference to the fourth aspect, in some implementations of the fourth aspect, the processing unit is further configured to determine the second beam group based on the first beam group, the beam distance difference threshold, and the spatial domain grid information.

With reference to the fourth aspect, in some implementations of the fourth aspect, determining the second beam group based on the first beam group, the beam-angle difference threshold, and the beam angle information includes: The processing unit is configured to determine, as the second beam group, a beam group, among the plurality of beam groups, whose angle difference from the first beam group is greater than the beam-angle difference threshold.

With reference to the fourth aspect, in some implementations of the fourth aspect, the angle difference includes an angle difference between an angle center of the first beam group and an angle center of the second beam group; and the angle center of the first beam group or the angle center of the second beam group is obtained by calculating an arithmetic mean, a geometric mean, a harmonic mean, a square mean, or a moving average of angles of beams in the first beam group or the second beam group.

With reference to the fourth aspect, in some implementations of the fourth aspect, the configuration information further includes spatial domain grid information, and the spatial domain grid information indicates a coverage area range of each beam mapped onto the ground; and beams in each of the plurality of beam groups have adjacent coverage area ranges.

With reference to the fourth aspect, in some implementations of the fourth aspect, the processing unit is further configured to determine the second beam group based on the first beam group, the beam distance difference threshold, and the spatial domain grid information.

With reference to the fourth aspect, in some implementations of the fourth aspect, determining the second beam group based on the first beam group, the beam distance difference threshold, and the spatial domain grid information includes: The processing unit is further configured to determine, as the second beam group, a beam group, among the plurality of beam groups, whose distance difference from the first beam group is greater than the beam distance difference threshold.

With reference to the fourth aspect, in some implementations of the fourth aspect, the distance difference includes a distance difference between a coverage area center of the first beam group and a coverage area center of the second beam group; and the coverage area center of the first beam group or the coverage area center of the second beam group is obtained by calculating an arithmetic mean, a geometric mean, a harmonic mean, a square mean, or a moving average of coverage areas of the first beam group or the second beam group.

With reference to the fourth aspect, in some implementations of the fourth aspect, the spatial domain grid information includes coverage area update information; and the coverage area update information indicates a portion of a current coverage area of each beam mapped to the ground that changes relative to a previous coverage area of the beam mapped to the ground.

With reference to the fourth aspect, in some implementations of the fourth aspect, the configuration information is transmitted by using radio resource control signaling, media access control-control element signaling, or broadcast.

With reference to the fourth aspect, in some implementations of the fourth aspect, the measurement feedback information includes a beam number of a reported beam in the first beam group or the second beam group.

According to a fifth aspect, a communication apparatus is provided, including a processor coupled to a memory, where the memory is configured to store a computer program, and the processor is configured to run the computer program, to cause the communication apparatus to perform the method according to the first aspect and any one of the possible implementations of the first aspect.

According to a sixth aspect, a communication apparatus is provided, including a processor coupled to a memory, where the memory is configured to store a computer program, and the processor is configured to run the computer program, to cause the communication apparatus to perform the method according to the second aspect and any one of the possible implementations of the second aspect.

According to a seventh aspect, a computer-readable storage medium is provided, where the computer-readable storage medium stores a computer program, and when the computer program is executed by a computer, the computer is enabled to perform the communication method according to the first aspect and any one of the possible implementations of the first aspect, or according to the second aspect and any one of the possible implementations of the second aspect.

According to an eighth aspect, a computer program product including instructions is provided. When the computer program product is run on a computer, the computer is enabled to perform the communication method according to the first aspect and any one of the possible implementations of the first aspect, or according to the second aspect and any one of the possible implementations of the second aspect.

According to a ninth aspect, a chip is provided, where the chip includes a processor and a data interface, and the processor reads, through the data interface, instructions stored in a memory, to perform the communication method according to the first aspect and any one of the possible implementations of the first aspect, or according to the second aspect and any one of the possible implementations of the second aspect.

With reference to the ninth aspect, in a possible implementation, the processor is coupled to the memory through an interface.

With reference to the ninth aspect, in a possible implementation, the chip system further includes the memory. The memory stores the computer program or the computer instructions.

### BRIEF DESCRIPTION OF DRAWINGS

FIG. 1 is a diagram of a scenario according to an embodiment of this application;
FIG. 2 is a diagram of concurrent multi-beam transmission according to an embodiment of this application;
FIG. 3 is a diagram of a multi-beam spatial arrangement according to an embodiment of this application;
FIG. 4 is a schematic flowchart of a communication method according to an embodiment of this application;
FIG. 5 is a diagram of a beam subset definition method according to an embodiment of this application;
FIG. 6 is a diagram of multi-beam concurrent multi-user transmission according to an embodiment of this application;
FIG. 7 is a diagram of another beam subset definition method according to an embodiment of this application;
FIG. 8 is a diagram of still another beam subset definition method according to an embodiment of this application;
FIG. 9 is a diagram of ground coverage corresponding to a beam according to an embodiment of this application;
FIG. 10 is a diagram of still another beam subset definition method according to an embodiment of this application;
FIG. 11 is a diagram of still another beam subset definition method according to an embodiment of this application;
FIG. 12 is a diagram of still another beam subset definition method according to an embodiment of this application;
FIG. 13 is a diagram of still another beam subset definition method according to an embodiment of this application;
FIG. 14 is a diagram of a structure of a communication apparatus according to an embodiment of this application;
FIG. 15 is a diagram of a structure of a terminal device according to an embodiment of this application;
FIG. 16 is a diagram of a structure of another communication apparatus according to an embodiment of this application; and
FIG. 17 is a diagram of a structure of a network device according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, or the like.

A terminal device (for example, user equipment (user equipment, UE)) in embodiments of this application includes various devices having a wireless communication function, and the devices may be configured to connect a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, such as an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, an in-vehicle device, a wearable device, a cellular phone (cellular phone), a smartphone (smartphone), a SIP (session initiation protocol) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-rotor helicopter, a quadcopter, or an airplane), a ship, a remote control device, a smart home device, an industrial device, an apparatus disposed in the foregoing device (for example, a communication module, a modem, or a chip in the foregoing device), or another processing device connected to a wireless modem. It should be understood that in some scenarios, the terminal device may alternatively serve as a base station. For example, the terminal device may serve as a scheduling entity that provides a sidelink signal between terminal devices in a V2X scenario, a D2D scenario, a P2P scenario, or the like.

A network device in embodiments of this application may be a device for communicating with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point, a primary station, a secondary station, a multi-standard radio (motor slide retainer, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, a radio unit (radio unit, RU), or the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be an access network device in an open radio access network (open RAN, O-RAN, or ORAN) or a cloud radio access network (cloud radio access network, CRAN). Alternatively, the network device may be a satellite in a satellite communication system.

In some deployments, the network device mentioned in embodiments of this application may alternatively be a device including a CU, or a DU, or a CU and a DU, or a device including a control plane CU node (a central unit-control plane (central unit-control plane, CU-CP)), a user plane CU node (a central unit-user plane (central unit-user plane, CU-UP)), and a DU node.

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the CU-CP may also be referred to as an open central unit-control plane (open central unit control plane, O-CU-CP), the CU-UP may also be referred to as an open central unit-user plane (open central unit user plane, O-CU-UP), and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media/medium access control, MAC), and physical layer-high (PHY-high) |
| O-RU | Physical lower layer (PHY-low) |

It should be noted that, in the ORAN system, the network device in this application may be one or more of the network elements in Table 1.

A specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information.

A specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

Before the solutions of embodiments of this application are described, the following descriptions are provided.
(1) In embodiments of this application, the "indication" may include a direct indication, an indirect indication, an explicit indication, or an implicit indication. When a piece of indication information is described as indicating A, it may be understood that the indication information carries A, directly indicates A, or indirectly indicates A.
   In embodiments of this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.
(2) In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The following describes technical terms in embodiments of this application.

**Beam (beam):** may be understood as a spatial filter (spatial filter) or a spatial parameter (spatial parameters). A beam used to send a signal may be referred to as a transmit beam (transmit beam, Tx beam), and may be a spatial domain transmit filter (spatial domain transmit filter) or a spatial domain transmit parameter (spatial transmit parameters, spatial Tx parameters), or may be a spatial transmit angle (for example, an azimuth Azimuth angle or a zenith Zenith angle) or a spatial transmit angle range (for example, an azimuth center angle and an offset, azimuth uncertainty, an azimuth protection range, a zenith center angle and an offset, zenith uncertainty, or a zenith protection range), or the like. A beam used to receive a signal may be referred to as a receive beam (receive beam, Rx beam), and may be a spatial domain receive filter (spatial domain receive filter) or a spatial receive parameter (spatial receive parameters, spatial Rx parameters), or may be a spatial receive angle (such as an azimuth angle (azimuth) or a zenith angle (zenith)) or a spatial receive angle range (such as an azimuth center angle and an offset, azimuth uncertainty, an azimuth protection range, a zenith center angle and an offset, zenith uncertainty, or a zenith protection range), or the like.

A beam forming technology may be a beamforming technology or another technology. For example, the beamforming technology may be specifically a digital beamforming technology, an analog beamforming technology, a hybrid digital/analog beamforming technology, or the like. The transmit beam may refer to signal strength distribution formed in different directions in space after a signal is transmitted through an antenna, and the receive beam may refer to signal strength distribution in different directions in space of a radio signal received from an antenna. The beamforming technology in embodiments of this application may be implemented based on a power amplifier of a new material, or may be implemented based on a new antenna architecture, for example, a new hybrid phased array and lens antenna technology.

In a 5G-NR protocol, a beam may be a spatial filter (spatial filter). However, it should be understood that this application does not exclude a possibility of defining another term in a future protocol to represent a same or similar meaning.

**Antenna panel (antenna panel):** is referred to as a panel (panel) for short. Each antenna panel may be configured with one or more receive beams and one or more transmit beams. Therefore, the antenna panel may also be understood as a beam group. A communication device, for example, a terminal device or a network device, may receive a signal by using a receive beam on an antenna panel, or may transmit a signal by using a transmit beam on the antenna panel.

In embodiments of this application, for the terminal device, the panel may be distinguished by using a resource of an uplink reference signal. The uplink reference signal may be a sounding reference signal (sounding reference signal, SRS). By way of example but not limitation, one antenna panel may correspond to one SRS resource set (resource set) identifier (identifier, ID). In other words, one SRS resource set ID may indicate one terminal device panel.

For the network device, the network device may be distinguished by using a panel ID. For example, the panel ID may be indicated by a transmission configuration indicator (transmission configuration indicator, TCI).

**Beam pair link (beam pair link, BPL):** is a pairing relationship between a transmit beam and a receive beam, and may also be referred to as a pairing relationship between a spatial domain transmit filter and a spatial domain receive filter. A large beamforming gain can be obtained through transmission of a signal between a transmit beam and a receive beam that have a beam pair link.

In an implementation, a transmitting end may transmit a reference signal through beam sweeping, and a receiving end may also receive a reference signal through beam sweeping. Specifically, the transmitting end may form different directional beams in space through beamforming, and may perform polling on a plurality of different directional beams, to transmit a reference signal over different directional beams, so that power for transmitting the reference signal can reach a maximum value in a direction of a transmit beam. The receiving end may also form different directional receive beams corresponding to different space directions through beamforming, and may perform polling on a plurality of different directional beams, to receive a reference signal over different directional beams, so that power for receiving the reference signal by the receiving end can reach a maximum value in a direction of a receive beam.

By traversing each transmit beam and each receive beam, the receiving end may perform channel measurement based on the received reference signal, and report a measurement result to the transmitting end. For example, the receiving end may report a reference signal resource with large reference signal received power (reference signal received power, RSRP) to the transmitting end, for example, report an identifier of a reference signal resource, so that the transmitting end transmits and receives a signal based on a beam pair link with good channel quality during data or signaling transmission.

**Reference signal and reference signal resource:** The reference signal may be used for channel measurement, channel estimation, beam quality monitoring, or the like. The reference signal resource may be used to configure transmission attributes of the reference signal, for example, a time-frequency resource position, a port mapping relationship, a power factor, and a scrambling code. For details, refer to a current technology. A transmitter device may send the reference signal based on the reference signal resource, and a receiver device may receive the reference signal based on the reference signal resource.

The reference signal in embodiments of this application may include, for example, a channel state information reference signal (channel state information reference signal, CSI-RS), a synchronization signal block (synchronization signal block, SSB), and a sounding reference signal (sounding reference signal, SRS). Correspondingly, the reference signal resource may include a CSI-RS resource (CSI-RS resource), an SSB resource, and an SRS resource (SRS resource).

To distinguish between different reference signal resources, each reference signal resource may correspond to an identifier of one reference signal resource, for example, a CSI-RS resource identifier (CSI-RS resource indicator or identifier, CRI), an SSB resource identifier (SSB resource indicator or identifier, SSBRI), or an SRS resource index (SRS resource index or indicator, SRI).

It should be noted that the SSB resource may also be understood as a synchronization signal/physical broadcast channel block (synchronization signal/physical broadcast channel block, SS/PBCH block) resource. In embodiments of this application, for ease of differentiation and description, unless otherwise specified, the SSB resource and the SS/PBCH block resource may have a same meaning, and the SSB resource and the SS/PBCH block resource may have a same meaning. In addition, in some cases, the SSB may also refer to the SSB resource. Therefore, the SSB resource identifier may also be referred to as an SSB index (SSB index) sometimes.

It should be understood that the reference signal and the corresponding reference signal resource listed above are merely examples for description, and should not constitute any limitation on embodiments of this application. Embodiments of this application do not exclude a possibility of defining another reference signal in a future protocol to implement a same or similar function.

In configuration signaling of the reference signal resource, different time domain behaviors (time domain behavior) may be indicated by using different time domain behavior parameters. By way of example but not limitation, the time domain behaviors may include, for example, a periodic (periodic) behavior, a semi-persistent (semi-persistent, SP) behavior, and an aperiodic (aperiodic, AP) behavior.

For example, based on different time domain behaviors, the CSI-RS may include a periodic CSI-RS, an aperiodic CSI-RS, and a semi-persistent CSI-RS. Based on different time domain behaviors, the SRS may also include a periodic SRS, an aperiodic SRS, and a semi-persistent SRS.

The reference signal resource identifier indicates a reference signal resource used in a beam training process. One spatial relationship is used to determine one transmit beam. The terminal device may maintain a correspondence between a reference signal resource identifier and a transmit beam in a beam training process, and the network device may maintain a correspondence between a reference signal resource identifier and a receive beam in a beam training process. A pairing relationship between the transmit beam and the receive beam may be established by using the reference signal resource identifier.

In a subsequent communication process, the terminal device may determine a transmit beam based on a spatial relation indicated by the network device, and the network device may determine a receive beam based on the same spatial relation.

In addition, each spatial relation may further include power control information. The power control information may include, for example, at least one of the following: an expected receive power, a path loss reference signal, and a path loss compensation parameter. The terminal device may determine, based on the power control information, a transmit power used to send the uplink signal.

It should be understood that information included in the spatial relationship listed herein is merely an example, and should not constitute any limitation on embodiments of this application. For example, the spatial relationship may further include an index of a serving cell (servecellindex), a bandwidth part (bandwidth part, BWP) identifier (identifier, ID), and the like. Because the serving cell and the BWP are not involved in embodiments of this application, details are not described herein.

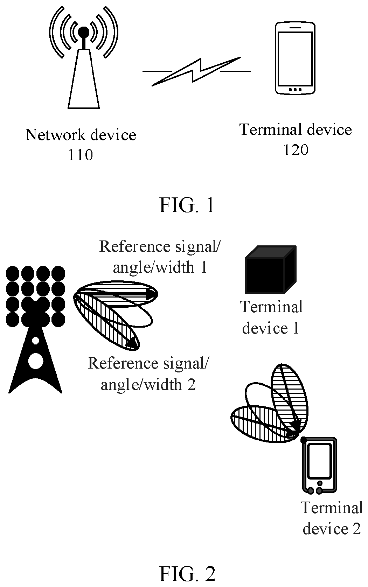

FIG. 1 is a diagram of an application scenario to which a method according to an embodiment of this application is applicable. It should be understood that a scenario in which the method in this embodiment of this application may be used may include more or fewer apparatuses or devices, or may include apparatuses or devices having similar functions. The scenario shown in FIG. 1 includes a network device 110 (which may include one or more network devices) and a terminal device 120 (which may include one or more terminal devices). Both the network device and the terminal device may have a high-frequency communication capability and a low-frequency communication capability. It should be noted that in a communication method provided in this embodiment of this application, a single network device and a plurality of terminal devices may be used as an example, and the network device may transmit data or control signaling to the terminal devices.

Beam alignment between the terminal device and the network device may be implemented through information exchange between the terminal device and the network device. The terminal device may perform beam measurement based on a reference signal (for example, an SSB or a CSI-RS) sent by the network device, and report a reference signal number and beam quality information (for example, RSRP or a signal to interference plus noise ratio (signal to interference plus noise ratio, SINR)) corresponding to one or more beams. The network device may indicate, to the terminal device, a reference signal resource number corresponding to a serving beam and/or a quasi-co-location (quasi-co-location, QCL) relationship between the reference signal resource number corresponding to the serving beam and a reference signal resource number corresponding to a measurement beam, used for subsequent data transmission. To ensure a beam-aligned state between the network device and the terminal device, information exchange between the terminal device and the network device is usually performed continuously.

In addition, a current wireless communication system introduces a spectrum resource with a higher frequency, for example, a millimeter wave or a terahertz frequency band, to meet an increasing communication requirement. Generally, in a high frequency band, a path loss experienced by a wireless signal is large, thereby affecting a coverage distance of the wireless signal. In a millimeter wave and a terahertz frequency band, a beamforming technology may be used to converge signal energy to a specific angle range, so as to increase a coverage distance of a wireless signal.

FIG. 2 is a diagram of concurrent multi-beam transmission according to an embodiment of this application. As a service requirement increases and a capability of a network device is improved, in a next-generation wireless communication system such as 6G, the network device may support parallel transmission of a plurality of beams, so as to reduce a latency and overheads of beam measurement, improve spectral efficiency, and reduce a transmission latency.

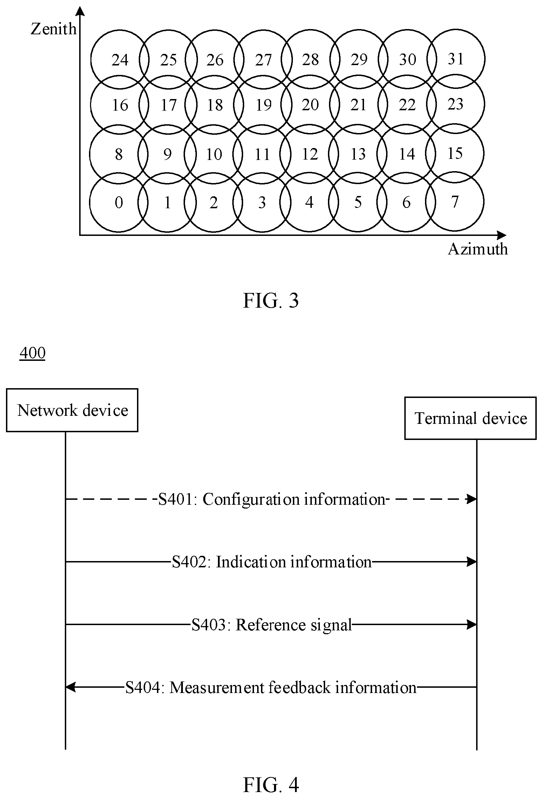

FIG. 3 is a diagram of a multi-beam spatial arrangement according to an embodiment of this application. To implement beam alignment between a terminal device and a network device, the terminal device and the network device usually exchange information. For example, the terminal device notifies the network device of an available beam, and the network device notifies the terminal device of transmit and receive beams. Further, the network device may notify an angle, a width, and beam spatial arrangement information of a beam, to improve beam measurement precision and efficiency.

The network device and the terminal device need to align beams for subsequent data transmission. Beam alignment between the terminal device and the network device may be implemented through information exchange between the terminal device and the network device. To ensure a beam-aligned state between the network device and the terminal device, information exchange between the terminal device and the network device is usually performed continuously.

In a process of information exchange between the terminal device and the network device, the network device configures beams used for beam measurement and a reporting quantity, the terminal device selects and reports measurement feedback information based on a measurement result, and the terminal device calculates a full set of beams used for beam measurement, resulting in high system overheads.

In view of the foregoing problem, embodiments of this application provide a beam measurement method and an apparatus, to reduce system overheads of a beam measurement process.

The following describes technical solutions of embodiments in this application with reference to accompanying drawings.

FIG. 4 is a schematic flowchart of a communication method 400 according to an embodiment of this application. The method 400 shown in FIG. 4 may be applied to the communication system shown in FIG. 1. The method 400 includes the following process.

S401: A terminal device receives configuration information, and correspondingly, a network device sends the configuration information. The configuration information includes beam measurement set information and/or beam grouping information, the beam measurement set information indicates the plurality of beams used for beam measurement, and the beam grouping information indicates group numbers of the plurality of beam groups.

Specifically, the configuration information sent by the network device may be transmitted by using semi-static signaling. In other words, the network device may send the configuration information by using semi-static signaling, and the terminal device may receive the configuration information by using semi-static signaling.

Optionally, in an ORAN system, the network device in S401 may be the O-CU-CP network element, the O-DU network element, and/or the O-RU network element shown in Table 1.

It should be understood that S401 is an optional step, and the configuration information sent by the network device may be pre-negotiated or predefined configuration information. This is not limited in this application.

In a possible implementation, the configuration information is transmitted by using radio resource control signaling, media access control-control element signaling, or broadcast. In this case, the network device may be the O-CU-CP network element shown in Table 1.

Specifically, the beam measurement set information may also be referred to as beam universal set information or basic beam information, and may include a set of a plurality of beams that can be used for beam measurement between the network device and the terminal. The plurality of beams that can be used for beam measurement between the network device and the terminal may be all or some optional beams between the network device and the terminal device.

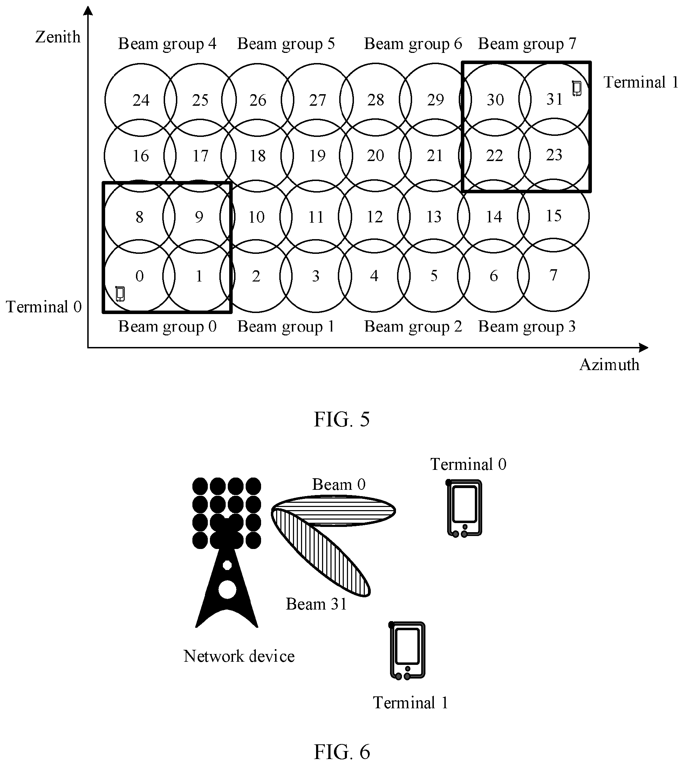

FIG. 5 is a diagram of a beam subset definition method according to an embodiment of this application.

For example, refer to FIG. 5. The beam measurement set information may include a beam 0 to a beam 31 in FIG. 5.

Specifically, the beam grouping information may also be referred to as beam group number information or beam group distinguishing information. The plurality of beams that can be used for beam measurement between the network device and the terminal may be divided into a plurality of beam groups. Each beam group may include a plurality of beams. The plurality of beams that can be used for beam measurement between the network device and the terminal may be all or some optional beams between the network device and the terminal device.

For example, refer to FIG. 5. The beam grouping information may include different beam subsets that are defined by the network device based on different numbers for the beam 0 to the beam 31 in the beam measurement set. The beam 0, a beam 1, a beam 8, and a beam 9 are a beam group 1, and a beam 2, a beam 3, a beam 10, and a beam 11 are a beam group 2. By analogy, the beam 0 to the beam 31 in the beam measurement set are divided into eight beam groups based on numbers 0 to 7.

According to the method provided in this embodiment of this application, the terminal device receives the beam measurement set information and/or the beam grouping information, to determine a beam grouping status, so as to efficiently perform beam measurement with low overheads in combination with the received indication information.

In a possible implementation, the network device defines beams adjacent in spatial domain as one beam group. As shown in FIG. 5, the beam group 0 includes the beam 0, the beam 1, the beam 8, and the beam 9.

In another possible implementation, the network device defines beams that are concurrent in spatial domain as one beam group.

For example, it is assumed that the beam group 0 includes the beam 0, the beam 2, a beam 16, and a beam 18. In this case, beams {0, 2, 16, 18} are concurrent in spatial domain, that is, are simultaneously sent in time.

S402: The terminal device receives indication information, and correspondingly, the network device sends the indication information. The indication information indicates at least one beam group among a plurality of beam groups, and a plurality of beams used for beam measurement are divided into the plurality of beam groups.

It should be understood that the indication information may also be referred to as beam subset information. This is not limited in this embodiment of this application. For example, the indication information sent by the network device may indicate at least one beam subset used by the terminal device to perform beam measurement, for example, a candidate serving beam subset used to measure signal strength and/or a candidate paired beam subset used to measure interference strength. Each beam subset may include one or more beam groups. Names of the beam group and the beam subset are not limited in this embodiment of this application. In addition, a specific format in which the indication information indicates the beam subset or the beam group is not limited in this embodiment of this application.

Specifically, a beam universal set between the network device and the terminal device may be divided into a plurality of beam groups, and one beam group may include a plurality of beams allocated a same beam group number.

Optionally, in an ORAN system, the network device in S402 may be the O-CU-CP network element, the O-DU network element, and/or the O-RU network element shown in Table 1.

In a possible implementation, the indication information is transmitted by using media access control-control element (media/medium access control-control element, MAC-CE) signaling or downlink control information (downlink control information, DCI) signaling. In this case, the network device may be the O-DU network element shown in Table 1.

S403: The network device sends a reference signal by using at least one beam group, and correspondingly, the terminal device receives the reference signal transmitted by using the at least one beam group. The reference signal is used to determine measurement feedback information.

It should be understood that the reference signal may also be referred to as a pilot or a pilot sequence, and may be used for channel estimation in a communication system.

It should be noted that a specific manner of time-frequency multiplexing, frequency division multiplexing, or code division multiplexing of the reference signal for beam measurement is not limited.

Specifically, the terminal device calculates beam quality based on the reference signal transmitted by using the at least one beam group. The reference signal may include at least one of a synchronization signal block, a channel state information reference signal, a tracking reference signal (tracking reference signal, TRS), a positioning reference signal (positioning reference signal, PRS), and a perception reference signal (sensing reference signal, SeRS).

Specifically, the network device may send the reference signal only in the one or more beam groups indicated by the indication information. In this case, the network device may be the O-RU network element shown in Table 1. Correspondingly, the terminal device receives the reference signal sent in the one or more beam groups indicated by the indication information, to perform beam measurement.

Optionally, in an ORAN system, the network device in S403 may be the O-CU-CP network element, the O-DU network element, and/or the O-RU network element shown in Table 1.

It should be understood that the network device may alternatively send the reference signal to the terminal device in a full frequency band, and when calculating the beam quality information, the terminal device selects only a reference signal transmitted by using at least one beam group indicated by the indication information for calculation.

S404: The terminal device sends measurement feedback information, and correspondingly, the network device receives the measurement feedback information.

Specifically, the measurement feedback information may include a beam number selected by the terminal device and corresponding beam quality information, and the beam quality information may be RSRP, an SINR, or the like.

Optionally, in an ORAN system, the network device in S404 may be the O-CU-CP network element, the O-DU network element, and/or the O-RU network element shown in Table 1.

In a possible implementation, the measurement feedback information may be transmitted by using uplink control information (uplink control information, UCI) or media access control-control element signaling. In this case, the network device may be the O-CU-UP network element shown in Table 1.

According to the method provided in this embodiment of this application, the terminal device receives the indication information, to select some beams from the plurality of beams used for beam measurement, to perform beam measurement. This reduces a quantity of beams measured by the terminal device, and reduces overheads used by the terminal device for measurement. In addition, the terminal device determines, based on an indication from the network device, to perform beam measurement by using which beams, thereby improving system controllability.

In a possible implementation, the at least one beam group indicated by the indication information includes a first beam group and a second beam group, where the first beam group is used to measure signal strength, and the second beam group is used to measure interference strength.

It should be understood that the first beam group may be one or more beam groups. The first beam group may also be referred to as a candidate serving beam subset or a channel measurement resource (channel measurement resource, CMR) subset, or the candidate serving beam subset/the CMR subset includes the first beam group. In other words, the first beam group may be explained as a union set of candidate serving beam groups indicated by the network device to the terminal device from the beam universal set. Similarly, the second beam group may be one or more beam groups. The second beam group may also be referred to as a candidate paired beam subset or an interference measurement resource (interference measurement resource, IMR) subset, or the candidate paired beam subset/the IMR subset includes the second beam group. In other words, the second beam group may be explained as a union set of candidate paired beam groups (or referred to as candidate interference beam groups) indicated by the network device to the terminal device from the beam universal set. A specific name of the second beam group is not limited in this embodiment of this application.

Further, the measurement feedback information may include SINRs corresponding to different combinations of serving beams and paired beams. A formula for calculating the SINR meets: $SINR = \frac{{P}_{signal}}{{P}_{noise} + {P}_{interference}}$
where, *P_{signal}* represents signal strength, and the terminal device obtains the signal strength by using a beam in the first beam group; *P*_{interference} represents interference strength, and the terminal device obtains the interference strength by using a beam in the second beam group; and *P*ₙₒᵢₛₑ represents noise strength, the noise strength generally exists in a background of a beam channel, and the terminal device may select a beam from the beam measurement set to obtain the noise strength.

According to the method provided in this embodiment of this application, the terminal device receives the indication information and determines the first beam group and the second beam group used for signal strength measurement, so that the terminal device can pair a plurality of channel measurement resources with interference measurement resources in real time, thereby reducing a quantity of beams measured by the terminal device, and reducing overheads used by the terminal device for measurement.

In a possible implementation, the indication information indicates a group number of the first beam group and a group number of the second beam group.

Still refer to FIG. 5. For example, for the terminal device 0, the indication information sent by the network device may indicate that the candidate serving beam subset of the terminal 0 is the beam group 0. In other words, the network device indicates, by using the indication information, that the beam 0, the beam 1, the beam 8, and the beam 9 are serving beams of the terminal 0. The indication information sent by the network device may indicate that the candidate paired beam subset of the terminal 0 is a beam group 7. In other words, the network device indicates, by using the indication information, that a beam 22, a beam 23, a beam 30, and the beam 31 are paired beams of the terminal 0.

Further, the indication information sent by the network device may indicate a plurality of terminal devices, for example, the terminal device 0 and a terminal device 1. As shown in FIG. 5, for the terminal device 1, the indication information sent by the network device may indicate that the candidate serving beam subset of the terminal 1 is the beam group 7. In other words, the network device indicates, by using the indication information, that the beam 22, the beam 23, the beam 30, and the beam 31 are serving beams of the terminal 1. The indication information sent by the network device may indicate that the candidate paired beam subset of the terminal 1 is the beam group 0. In other words, the network device indicates, by using the indication information, that the beam 0, the beam 1, the beam 8, and the beam 9 are paired beams of the terminal 0.

It should be understood that the network device may indicate that a plurality of beam groups serve as candidate serving beam subsets or candidate paired beam subsets. For example, the network device indicates that the beam group 6 and the beam group 7 serve as candidate paired beam subsets of the terminal 0.

Further, the terminal device may measure the serving beam and the corresponding paired beam based on the candidate serving beam subset and the candidate paired beam subset that are indicated by the network device and the reference signal received by the terminal device in S403, and calculate an SINR corresponding to the serving beam and the paired beam that are selected by the terminal device.

For example, the network device may traverse each combination of the serving beam in the candidate serving beam subset and the paired beam in the candidate paired beam subset, and calculate an SINR in each combination.

For example, refer to FIG. 5. For the terminal device 0, the network device indicates, by using the indication information, that the candidate serving beam subset of the terminal device 0 is the beam group 0, that is, serving beams include the beam 0, the beam 1, the beam 8, and the beam 9. The network device indicates, by using the indication information, that the candidate paired beam subset of the terminal device 0 is the beam group 7, that is, paired beams include the beam 22, the beam 23, the beam 30, and the beam 31. The terminal device selects a serving beam from the beam 0, the beam 1, the beam 8, and the beam 9, and selects a paired beam from the beam 22, the beam 23, the beam 30, and the beam 31. The terminal device traverses each combination of the serving beam and the paired beam, and calculates an SINR corresponding to the combination of the selected serving beam and paired beam.

For example, when the terminal device 0 selects the beam 0 as the serving beam, the terminal device may select the beam 22, the beam 23, the beam 30, and the beam 31 as interference beams paired with the beam 0, and calculate beam quality, that is, a value of the SINR, calculated by the terminal device 0 based on a received reference signal in four pairing cases of the beam 0 and the beam 22, the beam 0 and the beam 23, the beam 0 and the beam 30, and the beam 0 and the beam 31 in which the beam 0 is used as the serving beam. By analogy, when the network device indicates that the candidate serving beam subset of the terminal device 0 is the beam group 0 and the candidate paired beam subset is the beam group 7, the terminal device may calculate SINRs in 4 × 4 = 16 combinations of serving beams and paired beams.

According to the method provided in this embodiment of this application, the terminal device determines, based on beam group numbers, beam groups used for measurement and interference, so that signaling overheads can be reduced. In addition, because the first beam group and the second beam group are dynamically indicated by using the indication information, instead of being determined by the terminal device itself, system adaptability is improved.

Still refer to FIG. 4. In a possible implementation, the measurement feedback information reported by the terminal device in S404 includes a number of a serving beam and a number of a paired beam that are selected by the terminal device, and an SINR corresponding to the serving beam and the paired beam.

In a possible implementation, the measurement feedback information includes a beam number of a reported beam in the first beam group or the second beam group.

For example, the terminal device may report the measurement feedback information by using a feedback table. The feedback table includes a serving beam number field (CMR), a paired beam number field (IMR), and an SINR field corresponding to the serving beam and the paired beam. In other words, a format of the feedback table may include {CMR, IMR, SINR}, as shown in Table 2 and Table 3.

**Table 2**

| CMR | IMR | SINR |
|---|---|---|
| 0 (beam 0) | 3 (beam 31) | 22 (>20) |
| 0 (beam 0) | 0 (beam 22) | 17 (<20) |
| ... | ... | ... |

**Table 3**

| CMR | IMR | SINR |
|---|---|---|
| 3 (beam 31) | 0 (beam 0) | 21 (>20) |
| 0 (beam 22) | 3 (beam 9) | 16 (<20) |
| ... | ... | ... |

Table 2 is an example feedback table reported by the terminal 0, and Table 3 is an example feedback table reported by the terminal 1.

With reference to FIG. 5, the CMR number in Table 2 is a relative number in the candidate serving beam group of the terminal 0, that is, a relative number in the beam group 0. For example, a CMR number 0 in Table 2 indicates a beam with a smallest number in the beam group 0, that is, the beam 0. The IMR number in Table 2 is a relative number in the candidate paired beam group of the terminal 0, that is, a relative number in the beam group 7. For example, an IMR number 3 in Table 2 indicates a beam with a largest number in the beam group 7, that is, the beam 31. In addition, the terminal 0 selects the beam 0 as the serving beam, selects the beam 31 as the paired beam, and a corresponding SINR value is 22. Correspondingly, the CMR number in Table 3 is a relative number in the candidate serving beam group of the terminal 1, that is, a relative number in the beam group 7. For example, a CMR number 3 in Table 3 indicates a beam with a largest number in the beam group 7, that is, the beam 31. The IMR number in Table 3 is a relative number in the candidate paired beam group of the terminal 1, that is, a relative number in the beam group 0. For example, an IMR number 0 in Table 3 indicates a beam with a smallest number in the beam group 0, that is, the beam 0. In addition, the terminal 1 selects the beam 31 as the serving beam, selects the beam 0 as the paired beam, and a corresponding SINR value is 21.

According to the method provided in this embodiment of this application, an internal number of a beam group is used in the measurement feedback information reported by the terminal device, and the internal number occupies fewer bits than a global number of a beam in a beam measurement set during transmission, thereby reducing overheads used by the terminal device for reporting.

It should be understood that in the measurement feedback information reported by the terminal device, the serving beam and the paired beam may also be directly represented by using beam numbers. For example, a first row in Table 3 is {31, 0, 21}. This is not limited in this embodiment of this application.

For example, beams in different combinations in the feedback table are sorted in descending order of SINR values corresponding to the combinations. For example, in Table 2, a CMR is the beam 0, an IMR is the beam 31, and the SINR is 22, which is a combination with a maximum SINR value in the 16 combinations of the serving beams and the paired beams that are specified by the terminal device 0.

For example, the configuration information sent by the network device to the terminal device in S401 includes reporting resource configuration information, and reporting the resource information includes a maximum quantity of test results reported by the terminal device to the network device, that is, a maximum quantity of combinations of CMRs, IMRs, and SINRs that are reported by the terminal device and that are configured by the network device.

For example, the network device configures the terminal device to report a maximum of four combinations of CMRs, IMRs, and SINRs. For example, the network device configures the terminal device to report only four combinations of CMRs, IMRs, and SINRs with maximum SINR results. For another example, the network device configures the terminal device to report only the foremost four combinations of CMRs, IMRs, and SINRs that are sorted in descending order of SINR results.

For example, the configuration information sent by the network device to the terminal device in S401 includes reporting resource configuration information, and the reporting resource configuration information includes an SINR threshold of a test result reported by the terminal device to the network device. In other words, the terminal device selects only combination information, in which the SINR is greater than the threshold indicated by the network device, of CMRs, IMRs, and SINRs for reporting.

For example, the network device indicates the terminal device to report only combination information, in which the SINR is greater than 10 dB, of CMRs, IMRs, and SINRs. Using Table 3 as an example, the terminal 0 reports that SINR results of two pieces of combination information of CMRs, IMRs, and SINRs: {3, 0, 21} and {0, 3, 16} are both greater than 10 dB.

In a possible implementation, in the measurement feedback information sent by the terminal device, a reporting format of the IMR number includes a beam quality type pre-reserved field, and the beam quality type pre-reserved field indicates that the terminal device reports a signal-to-noise ratio (signal-to-noise ratio, SNR), that is, the terminal device does not consider interference of another beam or a reference signal during beam measurement.

For example, the network device indicates the terminal device to report only combination information, in which the SINR is greater than 10 dB, of CMRs, IMRs, and SINRs. If the network device does not find a combination that meets the condition, the network device directly reports an SNR result, and indicates, by using the beam quality type pre-reserved field, that the reported measurement feedback information includes the SNR.

In a possible implementation, the network device selects, from the combinations of the CMR, the IMR, and the SINR reported by the terminal device, a serving beam corresponding to a high SINR result to send data information. For example, the network device selects a serving beam whose SINR result is greater than 20 dB to send the data information.

For example, refer to Table 2. For the terminal 0, when the CMR is the beam 0, and the IMR is the beam 31, the corresponding SINR is 22 dB, which is greater than 20 dB, and the network device sends the data information to the terminal device 0 by using the serving beam 0.

In a possible implementation, the network device selects, from combinations of the CMR, the IMR, and the SINR reported by a plurality of terminal devices, a CMR corresponding to a highest SINR result for each of the plurality of terminal devices, to perform multi-beam multi-user (multi-user, MU) transmission, and send data information.

FIG. 6 is a diagram of multi-beam concurrent multi-user transmission according to an embodiment of this application.

For example, refer to FIG. 6, Table 2, and Table 3. For the terminal 0, when the CMR is the beam 0, and the IMR is the beam 31, the corresponding SINR is 22 dB, which is greater than 20 dB, and the network device sends the data information to the terminal device 0 by using the serving beam 0. For the terminal 1, when the CMR is the beam 31, and the IMR is the beam 0, the corresponding SINR is 21 dB, which is greater than 20 dB, and the network device sends the data information to the terminal device 1 by using the serving beam 31.

In a possible implementation, the configuration information further includes beam angle information, and the beam angle information includes a zenith angle and/or an azimuth angle of each beam; and beams in each of the plurality of beam groups have a same zenith angle range and/or a same azimuth angle range.

Specifically, the beam angle information may also be referred to as beam angle range information, angle range information, or the like, is used to determine a spatial angle of a beam, and may include a spatial angle range of each beam in a universal set of beams that can be used for beam measurement between the network device and the terminal device. The spatial angle of the beam includes a zenith angle of the beam and/or an azimuth angle of the beam. The zenith angle may include an included angle between a straight line direction from the network device to the terminal device and a direction perpendicular to the terminal device.

For example, the direction perpendicular to the terminal device may be used as a reference for the zenith angle. 0 degree indicates that the network device is located right above the zenith of the terminal device, and 90 degrees indicates that the network device is located on the horizon. In other words, a range of the zenith angle may include 0 degrees to 90 degrees. The azimuth angle may include a horizontal included angle between a straight line direction from the terminal device to the network device and a reference direction. For example, a due north direction may be used as a reference for the azimuth angle, a clockwise direction is positive, and a measurement range is 0 degrees to 360 degrees.

In other words, the terminal device may determine the spatial angle of the beam based on the beam angle information.

According to the method provided in this embodiment of this application, beams, among the plurality of beams used for beam measurement, that are adjacent in spatial domain are divided into a same beam group, so that beams in the same beam group have similar spatial domain characteristics. This helps the terminal device extract and use the spatial domain characteristics during measurement, and determine locations of the first beam group and the second beam group in combination with the indication information.

In a possible implementation, the configuration information is transmitted by using radio resource control signaling, media access control-control element signaling, or broadcast, or may be downloaded by the terminal device.

In a possible implementation, the indication information indicates a group number of the first beam group and a beam-angle difference threshold; and the terminal device determines the second beam group based on the first beam group, the beam-angle difference threshold, and the beam angle information.

In a possible implementation, determining the second beam group based on the first beam group, the beam-angle difference threshold, and the beam angle information includes: determining, as the second beam group, a beam group, among the plurality of beam groups, whose angle difference from the first beam group is greater than the beam-angle difference threshold.

Specifically, the network device indicates the candidate serving beam subset to the terminal device by sending the indication information, and indicates the angle difference threshold X to the terminal device. The terminal device selects, with reference to the beam angle information in the configuration information, a beam group whose angle center has an angle difference greater than X from an angle center of a candidate serving beam in the candidate serving beam subset, as a candidate paired beam subset corresponding to the candidate serving beam.

Optionally, in an ORAN system, the network device in the foregoing step may be the O-CU-CP network element, the O-DU network element, and/or the O-RU network element shown in Table 1.

It should be understood that the candidate paired beam subset determined by the network device based on an angle pairing condition may include one or more beam groups. This is not limited in this embodiment of this application.

For example, a method for calculating the angle center of the beam group includes but is not limited to arithmetic averaging, geometric averaging, harmonic averaging, square averaging, or moving averaging.

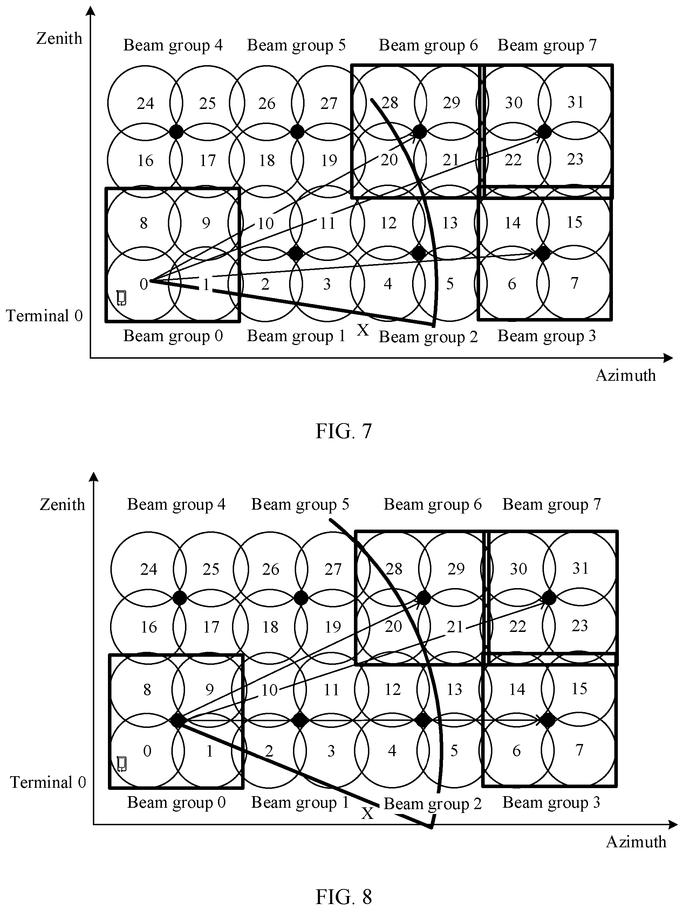

FIG. 7 is a diagram of another beam subset definition method according to an embodiment of this application.

It should be understood that in the diagram of the beam subset definition method shown in FIG. 7, beams adjacent in spatial domain are considered as a beam group. To be specific, the beam group 0 includes beams {0, 1, 8, 9}, the beam group 1 includes beams {2, 3, 10, 11}, and so on.

For example, refer to FIG. 7. For the terminal device 0, the network device sends the indication information to the terminal device 0, to indicate that the candidate serving beam subset is the beam group 0, and the terminal device determines, with reference to the beam angle information and based on a pairing condition, a candidate paired beam group corresponding to each candidate serving beam in the beam group 0. The pairing condition is that an angle difference between an angle center of a beam group in the candidate paired beam group and an angle center of a candidate serving beam in the beam group 0 is greater than the angle difference threshold X.

It should be understood that the candidate paired beam group may be explained as one or more beam groups determined based on the pairing condition and based on one beam group in the candidate serving beam subset indicated by the network device.

Specifically, still refer to FIG. 7. The candidate serving beam 0 in the beam group 0 is used as an example. Other than the candidate serving beam group, namely, the beam group 0, beam groups that are in remaining beam groups in the beam measurement set, namely, the beam group 1 to the beam group 7 and that meet the pairing condition, to be specific, beam groups whose angle centers have angle differences greater than an angle difference threshold X from an angle center of the beam 0 are the beam group 3, the beam group 6, and the beam group 7. Therefore, the terminal device 0 determines, by using the indication information, that candidate paired beam groups corresponding to the candidate serving beam 0 include the beam group 3, the beam group 6, and the beam group 7. In other words, the terminal device 0 determines, by using the indication information, that candidate paired beams corresponding to the candidate serving beam 0 include beams {6, 7, 14, 15, 20, 21, 22, 23, 28, 29, 30, 31}. According to the foregoing pairing condition, the network device indicates, to the terminal device 0, candidate paired beams respectively corresponding to candidate serving beams {1, 8, 9}.

FIG. 8 is a diagram of still another beam subset definition method according to an embodiment of this application.

It should be understood that in the diagram of the beam subset definition method shown in FIG. 8, beams adjacent in spatial domain are considered as a beam group. To be specific, the beam group 0 includes beams {0, 1, 8, 9}, the beam group 1 includes beams {2, 3, 10, 11}, and so on.

In a possible implementation, the angle difference includes an angle difference between an angle center of the first beam group and an angle center of the second beam group; and the angle center of the first beam group or the angle center of the second beam group is obtained by calculating an arithmetic mean, a geometric mean, a harmonic mean, a square mean, or a moving average of angles of beams in the first beam group or the second beam group.

For example, refer to FIG. 8. For the terminal device 0, the network device sends the indication information to the terminal device 0, to indicate that the candidate serving beam subset is the beam group 0, and the terminal device 0 determines, with reference to the beam angle information and based on an angle pairing condition, the candidate paired beam group corresponding to the beam group 0. The angle pairing condition is that an angle difference between an angle center of the candidate paired beam group and the angle center of the beam group 0 is greater than the angle difference threshold X.

Specifically, still refer to FIG. 8. In the beam measurement set, namely, the beam group 0 to the beam group 7, other than the candidate serving beam group, namely, the beam group 0, beam groups that are in remaining beam groups in the beam measurement set, namely, the beam group 1 to the beam group 7 and that meet the angle pairing condition, to be specific, beam groups whose angle centers have angle differences greater than an angle difference threshold X from an angle center of the beam group 0 are the beam group 3, the beam group 6, and the beam group 7. Therefore, the terminal device 0 determines, by using the indication information, that the candidate paired beam groups corresponding to the candidate serving beam group, namely, the beam group 0 include the beam group 3, the beam group 6, and the beam group 7. To be specific, the network device indicates, to the terminal device 0, that candidate paired beams corresponding to candidate serving beams {0, 1, 8, 9} include beams {6, 7, 14, 15, 20, 21, 22, 23, 28, 29, 30, 31}.

According to the method provided in this embodiment of this application, the terminal device determines the group number of the second beam group based on the received group number of the first beam group and the angle difference threshold, and then performs measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

In a possible implementation, the network device sends the angle difference threshold X through preconfiguration or via dynamic signaling same as that used to send the indication information, that is, indicates the angle difference threshold X to the terminal device.

It should be understood that in the diagram of the multi-beam spatial arrangement shown in FIG. 8 or FIG. 8, an angle difference between angle centers of beams, between angle centers of beam groups, or between angle centers of a beam and a beam group is represented as a distance between two points in an azimuth-zenith coordinate system. Therefore, the foregoing angle pairing condition may be represented by using an arc that uses the angle center of the beam 0 as an origin and uses the angle difference threshold X as a radius, as shown in FIG. 8, or the foregoing angle pairing condition may be represented by using an arc that uses the angle center of the beam group 0 as an origin and uses the angle difference threshold X as a radius, as shown in FIG. 8.

It should be understood that the foregoing process in which the terminal device determines the candidate paired beam subset based on the candidate serving beam subset and the pairing condition may also be performed by the network device. To be specific, the network device directly indicates a number of the candidate serving beam subset and a number of the candidate paired beam subset to the terminal device, where the candidate paired beam subset is obtained through calculation by using the candidate serving beam subset and the angle difference threshold X.

In still another possible implementation, the network device sends the indication information, to indicate the number of the candidate serving beam subset and the number of the candidate paired beam subset to the terminal device, where the network device determines the candidate paired beam subset based on the candidate serving beam subset and the angle pairing condition, and the angle pairing condition is as follows: An angle difference between an angle center of a candidate paired beam group and an angle center of a candidate serving beam in the candidate serving beam subset is greater than the angle difference threshold X, or an angle difference between the angle center of the candidate paired beam group and an angle center of a beam group in the candidate serving beam subset is greater than the angle difference threshold X.

Optionally, in an ORAN system, the network device in the foregoing step may be the O-CU-CP network element, the O-CU-UP network element, the O-DU network element, and/or the O-RU network element shown in Table 1.

According to the method provided in this embodiment of this application, a network device determines the group number of the second beam group based on the group number of the first beam group and the angle difference threshold, and indicates a terminal device to perform measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

Further, the terminal device measures the serving beam and the corresponding paired beam based on the candidate serving beam subset indicated by the network device and the candidate paired beam subset that is calculated by the network device or the terminal device based on the angle difference threshold, and by using reference signals transmitted in the candidate serving beam subset and the candidate paired beam subset, and calculates the SINR corresponding to the serving beam and the paired beam that are selected by the terminal device.

For example, the network device may traverse each combination of the candidate serving beam in the candidate serving beam subset and the candidate paired beam in the candidate paired beam subset, and calculate an SINR in each combination.

For example, refer to FIG. 8. For the terminal device 0, the network device indicates, by using the indication information, that the candidate serving beam subset of the terminal device 0 is the beam group 0, that is, candidate CMRs include the beam 0, the beam 1, the beam 8, and the beam 9. The terminal device or the network device indicates, by using the indication information, that the candidate paired beam IMR subset of the terminal device 0 is the beam group 3, the beam group 6, and the beam group 7, that is, the candidate IMR includes beams {6, 7, 14, 15, 20, 21, 22, 23, 28, 29, 30, 31}. The terminal device selects a serving beam from the candidate serving beam subset, and selects a paired beam from the candidate paired beam subset. The terminal device traverses each combination of the serving beam and the paired beam, and calculates an SINR corresponding to the combination of the selected serving beam and paired beam.

For example, when the terminal device 0 selects the beam 0 as the serving beam, the terminal device may select beams {6, 7, 14, 15, 20, 21, 22, 23, 28, 29, 30, 31} as interference beams paired with the beam 0, and calculate beam quality, that is, a value of the SINR, calculated by the terminal device 0 based on a received reference signal in 12 pairing cases of the beam 0 and the beams {6, 7, 14, 15, 20, 21, 22, 23, 28, 29, 30, 31} in which the beam 0 is used as the serving beam. By analogy, in the embodiment shown in FIG. 8, when the network device indicates that the candidate serving beam subset of the terminal device 0 is the beam group 0 and the candidate paired beam subset is the beam group {3, 6, 7}, the terminal device may calculate SINRs in 4 × 12 = 48 combinations of serving beams and paired beams.

In a possible implementation, the measurement feedback information includes a beam number of a reported beam in the first beam group or the second beam group.

Specifically, the indication information indicates that the candidate serving beam subset and/or the candidate paired beam subset that the terminal device needs to measure include a plurality of beam groups. In the measurement feedback information sent by the terminal device, a number of a beam in a candidate serving beam subset and/or a candidate paired beam subset including a plurality of beam groups uses a relative index that is jointly renumbered across the beam groups.

Specifically, the terminal device sorts, in ascending order of beam group numbers, the beam groups in the candidate serving beam subset or the candidate paired beam subset including the plurality of beam groups, and sorts beams in the sorted beam groups in ascending order of beam numbers, to obtain a relative index number, jointly renumbered across the beam groups, of the beam in the candidate serving beam subset or the candidate paired beam subset.

For example, refer to FIG. 7 or FIG. 8. The indication information indicates that the candidate paired beam subset that the terminal device 0 needs to measure includes three beam groups: the beam group 3, the beam group 6, and the beam group 7. Because the network device indicates that the candidate serving beam subset that the terminal device 0 needs to measure is the beam group 0, the terminal 0 needs to calculate SINRs in 4 × 12 = 48 combinations of serving beams and paired beams, and report the SINRs to the network device by using the measurement feedback information.

Refer to Table 4. When sending the measurement feedback information, the terminal device 0 first sorts the beam groups in ascending order of beam group numbers. To be specific, the beam groups in the candidate paired beam subset of the terminal device 0 are sorted in an order of the beam group 3, the beam group 6, and the beam group 7. After the beam groups are sorted, beams in each beam group are sorted in ascending order of beam numbers. Beams in the beam group 3 are sorted in a sequence of a beam 6, a beam 7, a beam 14, and a beam 15; beams in the beam group 6 are sorted in a sequence of a beam 20, a beam 21, a beam 28, and a beam 29; and beams in the beam group 7 are sorted in an order of a beam 22, a beam 23, a beam 30, and the beam 31, to obtain a beam arrangement order shown from top to bottom in Table 4. A local number in Table 4 is a relative index number that is jointly renumbered across beam groups and that is used for a paired beam in the measurement feedback information sent by the terminal device.

**Table 4**

| Local number | Beam number |
|---|---|
| 0 | 6 |
| 1 | 7 |
| 2 | 14 |
| 3 | 15 |
| 4 | 20 |
| 5 | 21 |
| 6 | 28 |
| 7 | 29 |
| 8 | 22 |
| 9 | 23 |
| 10 | 30 |
| 11 | 31 |

According to the method provided in this embodiment of this application, an internal number of a beam group is used in the measurement feedback information reported by the terminal device, and the internal number occupies fewer bits than a global number of a beam in a beam measurement set during transmission, thereby reducing overheads used by the terminal device for reporting.

In a possible implementation, in the measurement feedback information sent by the terminal device, a reporting format of the IMR number includes a beam quality type pre-reserved field, and the beam quality type pre-reserved field indicates that the terminal device reports a signal-to-noise ratio, that is, the terminal device does not consider interference of another beam or a reference signal during beam measurement.

Further, the network device selects, based on the measurement feedback information sent by the terminal device, a beam to send data information. Correspondingly, the terminal device receives the data information.

In a possible implementation, the network device selects, from the combinations of the CMR, the IMR, and the SINR reported by the terminal device, a CMR corresponding to a high SINR result to send data information. For example, the network device selects a serving beam whose SINR result is greater than 20 dB to send the data information.

In another possible implementation, refer to FIG. 6. The network device selects, from combinations of the CMR, the IMR, and the SINR reported by a plurality of terminal devices, a CMR corresponding to a high SINR result for each of the plurality of terminal devices, to perform multi-beam multi-user transmission, and send data information.

It should be understood that a specific example in which the network device selects a beam to send the data information based on the measurement feedback information sent by the terminal device is described in detail in the foregoing embodiment, and details are not described herein in this embodiment of this application.

In a possible implementation, the configuration information further includes spatial domain grid information, and the spatial domain grid information indicates a coverage area range of each beam mapped onto the ground; and beams in each of the plurality of beam groups have adjacent coverage area ranges.

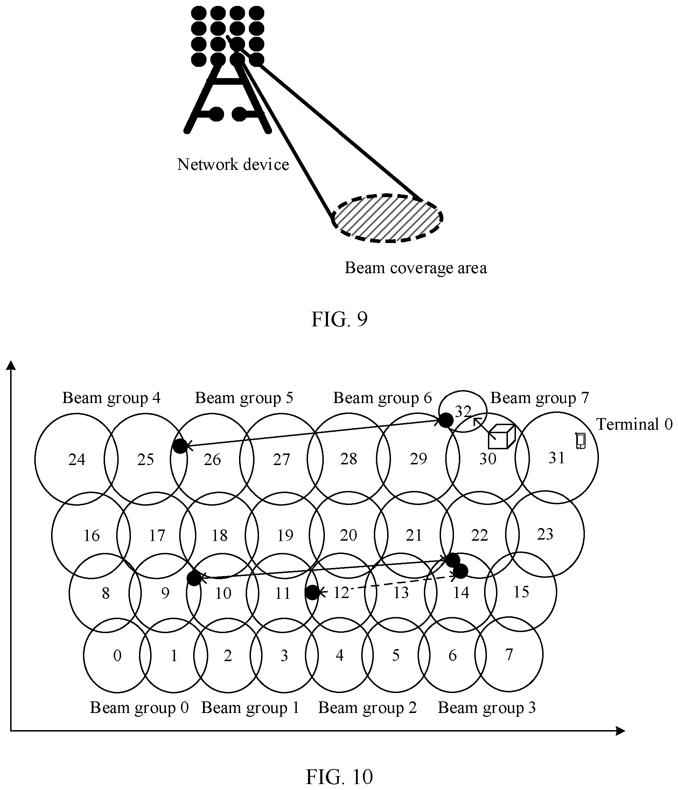

FIG. 9 is a diagram of ground coverage corresponding to a beam according to an embodiment of this application.

Refer to FIG. 9. A coverage area formed by arranging a circular beam sent by the network device on the ground is an elliptical area.

Specifically, spatial domain grid information may also be referred to as beam coverage information, beam mapping information, beam arrangement information, or the like. The spatial domain grid information may include a coverage area range of each beam, mapped to the ground, in a universal set of beams that can be used for beam measurement between the network device and the terminal device. The coverage area range of the beam mapped to the ground may be directly represented by establishing a coordinate system, or may be calculated by using indirect information such as beam width information or beam angle information.

In a possible implementation, the configuration information further includes the beam width information, and the network device may determine the spatial domain grid information by using the beam angle information or the beam width information.

Specifically, the beam angle information may include an absolute angle based on a global coordinate system or a relative angle relative to a reference angle. The coverage area of the beam in the beam grid information may include the ground coverage ellipse parameter of the beam, for example, coordinates of a center of a circle, a length of a minor semi-axis, a length of a major semi-axis, and a degree of an included angle. The network device describes a geometric shape of the ground coverage area of the beam by indicating the ground coverage ellipse parameter of the beam.

Specifically, the beam width information may also be referred to as beam width range information or the like, and may include a zenith angle width and/or an azimuth angle width of each beam, measured in degrees, in the universal set of beams that can be used for beam measurement between the network device and the terminal device. For example, the network device indicates, to the terminal device, that a width of a beam is 1 degree.

According to the method provided in this embodiment of this application, beams, among the plurality of beams used for beam measurement, that are adjacent in coverage area are divided into a same beam group, so that beams in the same beam group have similar coverage area characteristics. This helps the terminal device extract and use the coverage area characteristics during measurement, and determine locations of the first beam group and the second beam group in combination with the indication information.

In a possible implementation, the spatial domain grid information includes coverage area update information; and the coverage area update information indicates a portion of a current coverage area of each beam mapped to the ground that changes relative to a previous coverage area of the beam mapped to the ground.

For example, the network device adjusts the spatial domain grid information in a differential manner, that is, the spatial domain grid information sent by the network device is a changed part in the beam coverage area.

FIG. 10 is a diagram of still another beam subset definition method according to an embodiment of this application.

Specifically, refer to FIG. 10. The spatial domain grid information in the configuration information includes grid information of a plurality of coverage areas formed by arranging beams on the ground, and each grid in the spatial domain grid information corresponds to one coverage area formed by arranging one beam sent by the network device on the ground. The network device may adjust content of the spatial domain grid information in the configuration information based on a signal propagation environment.

For example, refer to FIG. 10. The beam 0 to the beam 31 are basic grids, and the basic grids may be obtained through calculation by using the beam angle information and the beam width information. The network device may supplement an extended beam coverage area, for example, a beam 32 in FIG. 10, to the basic grids based on an environment perception result.

For example, the beam coverage area extended by the network device for the basic grids may be formed through non-line-of-sight (non-line-of-sight, NLOS) reflection. For example, the beam coverage area 32 in FIG. 10 may be obtained by extending a beam coverage area 30. Therefore, the beam group 7 in FIG. 10 includes five beams {22, 23, 30, 31, 32}.

According to the method provided in this embodiment of this application, the spatial domain grid information is updated differentially, so that the spatial domain grid information can more accurately reflect coverage areas of different beams that are actually arranged on the ground. In addition, the spatial domain grid information transmits only a coverage area changed part determined based on an environment perception result, thereby avoiding sending repeated information and reducing signaling overheads.

Refer to FIG. 10. Coverage areas formed by arranging a plurality of circular beams sent by the network device on the ground are elliptical areas.

It should be understood that in the diagram of the beam subset definition method shown in FIG. 10, beams adjacent in coverage areas are considered as a beam group. To be specific, the beam group 0 includes beams {0, 1, 8, 9}, the beam group 1 includes beams {2, 3, 10, 11}, and so on.

In a possible implementation, the indication information indicates a group number of the first beam group and a beam distance difference threshold; and the method further includes: determining the second beam group based on the first beam group, the beam distance difference threshold, and the spatial domain grid information.

In a possible implementation, determining the second beam group based on the first beam group, the beam distance difference threshold, and the spatial domain grid information includes: determining, as the second beam group, a beam group, among the plurality of beam groups, whose distance difference from the first beam group is greater than the beam distance difference threshold.

Specifically, the network device sends the indication information to indicate the candidate serving beam subset and the distance difference threshold (or referred to as a distance threshold) Y to the terminal device, and the terminal device determines, with reference to the spatial domain grid information, a beam group that meets a distance pairing condition as a candidate paired beam group corresponding to the beam group in the candidate serving beam subset. The distance pairing condition is that a distance between any point in a coverage area of the candidate paired beam group and any point in a coverage area of the beam group in the candidate serving beam subset is greater than the distance difference threshold Y.

In a possible implementation, the network device sends the distance difference threshold Y through preconfiguration or by using dynamic signaling same as that used to send the indication information, that is, indicates the distance difference threshold Y to the terminal device.

It should be understood that the network device may indicate a single beam group as the candidate serving beam subset, or may indicate a single beam or a plurality of beam groups as the candidate serving beam subset. This is not limited in this embodiment of this application.

It should be understood that the candidate paired beam subset determined by the network device based on the distance pairing condition may include one or more beam groups. This is not limited in this embodiment of this application.

For example, a method for calculating a central coverage location of the beam group includes but is not limited to arithmetic averaging, geometric averaging, harmonic averaging, square averaging, or moving averaging.

For example, refer to FIG. 10. For the terminal device 0, the network device sends the indication information to the terminal device 0, to indicate that the candidate serving beam subset is the beam group 7, and the terminal device 0 determines, based on the pairing condition, the candidate paired beam group corresponding to the beam group 7. The pairing condition is that a distance between any point in the coverage area of the candidate paired beam group and any point in the coverage area of the beam group 7 is greater than the distance difference threshold Y.

Specifically, still refer to FIG. 10. In the beam measurement set, namely, the beam group 0 to the beam group 7, other than the candidate serving beam group, namely, the beam group 7, beam groups that are in remaining beam groups in the beam measurement set, namely, the beam group 0 to the beam group 6 and that meet the pairing condition, to be specific, beam groups with coverage areas in which any point has a distance greater than the distance difference threshold Y from any point in the coverage area of the candidate serving beam group are the beam group 0 and the beam group 4. Therefore, the terminal device 0 determines, by using the indication information, the candidate paired beam groups corresponding to the candidate serving beam group, that is, the candidate paired beam groups corresponding to the beam group 0 include the beam group 0 and the beam group 4. To be specific, the network device indicates, to the terminal device 0, that candidate paired beams corresponding to candidate serving beams {22, 23, 30, 31, 32} include beams {0, 1, 8, 9, 16, 17, 24, 25}.

For example, as shown by a dashed line in FIG. 10, there is a point in the coverage area of the beam group 1 and a point in the coverage area of the beam group 7, and a distance between the two points is less than the distance difference threshold Y. Therefore, the beam group 1 is not a candidate paired beam group corresponding to the candidate serving beam group 7.

In another possible implementation, the network device sends the indication information to indicate the candidate serving beam group and the distance difference threshold Y to the terminal device, and the terminal device determines, with reference to the spatial domain grid information, a beam group that meets a distance pairing condition as a candidate paired beam group corresponding to the candidate serving beam group. The distance pairing condition is that a distance between any point in a coverage area of the candidate paired beam group and any point in a coverage area of a candidate serving beam in the candidate serving beam group is greater than the distance difference threshold Y.

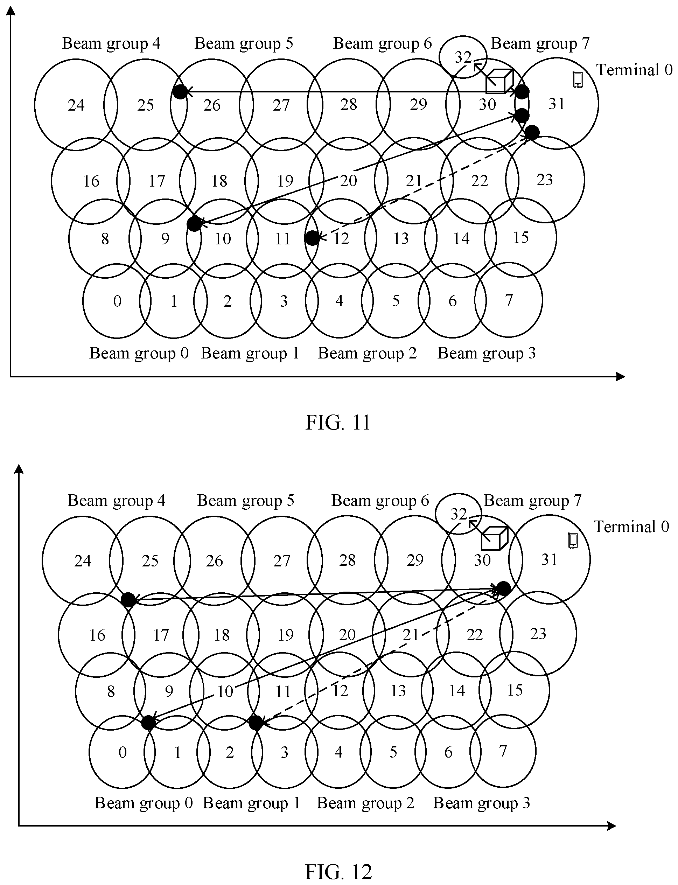

FIG. 11 is a diagram of still another beam subset definition method according to an embodiment of this application.

For example, refer to FIG. 11. For the terminal device 0, the network device sends the indication information to the terminal device 0, to indicate that the candidate serving beam subset is the beam group 7. In the beam group 7, using the candidate serving beam 31 as an example, the terminal device 0 determines, based on a pairing condition, a candidate paired beam group corresponding to the candidate serving beam 31. The pairing condition is that a distance between any point in a coverage area of the candidate paired beam group and any point in a coverage area of a candidate serving beam in the candidate serving beam group is greater than the distance difference threshold Y.

Specifically, still refer to FIG. 11. In the beam measurement set, namely, the beam group 0 to the beam group 7, other than the candidate serving beam group, namely, the beam group 7, beam groups that are in remaining beam groups in the beam measurement set, namely, the beam group 0 to the beam group 6 and that meet the pairing condition, to be specific, beam groups with coverage areas in which any point has a distance greater than the distance difference threshold Y from any point in the coverage area of the candidate serving beam in the candidate serving beam group are the beam group 0 and the beam group 4. Therefore, the terminal device 0 determines, by using the indication information, the candidate paired beam groups corresponding to the candidate serving beam 31, that is, the candidate paired beam groups corresponding to the beam 31 include the beam group 0 and the beam group 4. To be specific, the network device indicates, to the terminal device 0, that candidate paired beams corresponding to the candidate serving beam 31 include beams {0, 1, 8, 9, 16, 17, 24, 25}. By analogy, a candidate paired beam group corresponding to candidate serving beams {22, 23, 30, 32} may be determined.

In still another possible implementation, the distance difference includes a distance difference between a coverage area center of the first beam group and a coverage area center of the second beam group; and the coverage area center of the first beam group or the coverage area center of the second beam group is obtained by calculating an arithmetic mean, a geometric mean, a harmonic mean, a square mean, or a moving average of coverage areas of the first beam group or the second beam group.

Specifically, the network device sends the indication information to indicate the candidate serving beam group and the distance difference threshold Y to the terminal device, and the terminal device determines, with reference to the spatial domain grid information, a beam group that meets a distance pairing condition as a candidate paired beam group corresponding to the candidate serving beam group. The distance pairing condition is that a distance between a central location of a coverage area of the candidate paired beam group and a central location of a coverage area of the candidate serving beam group is greater than the distance difference threshold Y.

FIG. 12 is a diagram of still another beam subset definition method according to an embodiment of this application.

For example, refer to FIG. 12. For the terminal device 0, the network device sends the indication information to the terminal device 0, to indicate that the candidate serving beam CMR subset is the beam group 7, and the terminal device 0 determines, based on the pairing condition, the candidate paired beam group corresponding to the beam group 7. The pairing condition is that a distance between a central location of a coverage area of the candidate paired beam group and a central location of a coverage area of the candidate serving beam group is greater than the distance difference threshold Y.

Specifically, still refer to FIG. 12. In the beam measurement set, namely, the beam group 0 to the beam group 7, other than the candidate serving beam group, namely, the beam group 7, beam groups that are in remaining beam groups in the beam measurement set, namely, the beam group 0 to the beam group 6 and that meet the pairing condition, to be specific, beam groups with coverage areas whose central location has a distance greater than the distance difference threshold Y from the central location of the coverage area of the candidate serving beam group are the beam group 0 and the beam group 4. Therefore, the terminal device 0 determines, by using the indication information, the candidate paired beam groups corresponding to the candidate serving beam group, that is, the candidate paired beam groups corresponding to the beam group 7 include the beam group 0 and the beam group 4. To be specific, the network device indicates, to the terminal device 0, that candidate paired beams corresponding to candidate serving beams {22, 23, 30, 31, 32} include beams {0, 1, 8, 9, 16, 17, 24, 25}.

In still another possible implementation, the network device sends the indication information to indicate the candidate serving beam group and the distance difference threshold Y to the terminal device, and the terminal device determines, with reference to the spatial domain grid information, a beam group that meets a distance pairing condition as a candidate paired beam group corresponding to the candidate serving beam group. The distance pairing condition is that a distance between a central location of a coverage area of the candidate paired beam group and a central location of a coverage area of a candidate serving beam in the candidate serving beam group is greater than the distance difference threshold Y.

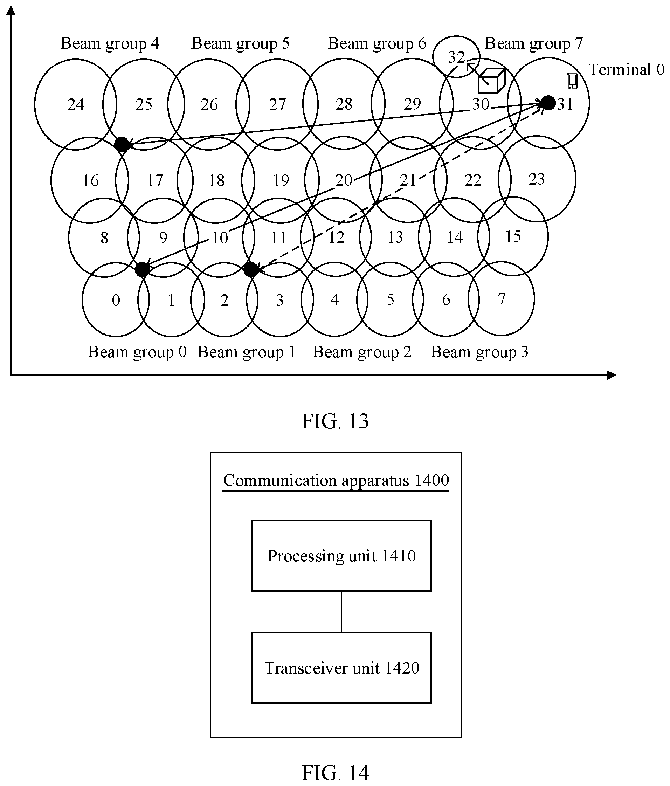

FIG. 13 is a diagram of still another beam subset definition method according to an embodiment of this application.

For example, refer to FIG. 13. For the terminal device 0, the network device sends the indication information to the terminal device 0, to indicate that the candidate serving beam CMR subset is the beam group 7. In the beam group 7, using the candidate serving beam 31 as an example, the terminal device 0 determines, based on a pairing condition, a candidate paired beam group corresponding to the candidate serving beam 31. The pairing condition is that a distance between a central location of a coverage area of the candidate paired beam group and a central location of a coverage area of a candidate serving beam in the candidate serving beam group is greater than the distance difference threshold Y.

Specifically, still refer to FIG. 13. In the beam measurement set, namely, the beam group 0 to the beam group 7, other than the candidate serving beam group, namely, the beam group 7, beam groups that are in remaining beam groups in the beam measurement set, namely, the beam group 0 to the beam group 6 and that meet the pairing condition, to be specific, beam groups with coverage areas whose central location has a distance greater than the distance difference threshold Y from the central location of the coverage area of the candidate serving beam in the candidate serving beam group are the beam group 0 and the beam group 4. Therefore, the terminal device 0 determines, by using the indication information, the candidate paired beam groups corresponding to the candidate serving beam 31, that is, the candidate paired beam groups corresponding to the beam 31 include the beam group 0 and the beam group 4. To be specific, the network device indicates, to the terminal device 0, that candidate paired beams corresponding to the candidate serving beam 31 include beams {0, 1, 8, 9, 16, 17, 24, 25}. By analogy, a candidate paired beam group corresponding to candidate serving beams {22, 23, 30, 32} may be determined.

Optionally, in an ORAN system, the network device in the foregoing step may be the O-CU-CP network element, the O-DU network element, and/or the O-RU network element shown in Table 1.

According to the method provided in this embodiment of this application, the terminal device determines the group number of the second beam group based on the received group number of the first beam group and the distance difference threshold, and then performs measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

In still another possible implementation, the network device sends the indication information, to indicate, to the terminal device, beam group numbers included in the candidate serving beam subset and the candidate paired beam subset. The network device determines the candidate paired beam subset based on the candidate serving beam subset and a distance pairing condition with reference to the spatial domain grid information. The distance pairing condition is that a distance between any point in a coverage area of a candidate paired beam group and any point in a coverage area of a candidate serving beam group is greater than a distance difference threshold Y, or a distance between any point in the coverage area of the candidate paired beam group and any point in a coverage area of a candidate serving beam in the candidate serving beam group is greater than the distance difference threshold Y, or a distance between a central location of the coverage area of the candidate paired beam group and a central location of the coverage area of the candidate serving beam group is greater than the distance difference threshold Y, or a distance between the central location of the coverage area of the candidate paired beam group and a central location of a coverage area of the candidate serving beam in the candidate serving beam group is greater than the distance difference threshold Y.

Optionally, in an ORAN system, the network device in the foregoing step may be the O-CU-CP network element, the O-CU-UP network element, the O-DU network element, and/or the O-RU network element shown in Table 1.

According to the method provided in this embodiment of this application, a network device determines the group number of the second beam group based on the group number of the first beam group and the distance difference threshold, and indicates a terminal device to perform measurement by using beams in the first beam group and the second beam group, so that the terminal device can pair the beams in the first beam group and the second beam group in real time, thereby reducing a quantity of beams measured by the terminal device, and reducing overheads used by the terminal device for measurement. In addition, because the first beam group and the second beam group are dynamically indicated by using the indication information, instead of being determined by the terminal device itself, system adaptability is improved.

It should be understood that the distance difference threshold Y is merely used as a parameter expression form, and does not indicate that the distance difference thresholds in embodiments are equal.

It should be understood that sequence numbers of the foregoing processes do not mean an execution sequence in embodiments of this application. The execution sequence of the processes should be determined based on functions and internal logic of the processes, and should not be construed as any limitation on the implementation processes of embodiments of this application.

It may be understood that in the foregoing method embodiments, a method implemented by the terminal device may alternatively be implemented by a component (for example, a chip or a circuit) that may be used in the terminal, and a method implemented by the network device may alternatively be implemented by a component (for example, a chip or a circuit) that may be used in the network device. The foregoing describes in detail the methods in embodiments of this application with reference to FIG. 4 to FIG. 13. The following describes communication apparatuses in embodiments of this application with reference to FIG. 14 to FIG. 17.

FIG. 14 is a diagram of a structure of a communication apparatus 1400 according to an embodiment of this application. The communication apparatus may include a processing unit 1410 and a transceiver unit 1420.

The communication apparatus 1400 provided in this embodiment of this application may correspond to processes performed by the terminal device in the method embodiments in FIG. 4 to FIG. 13. For a function of each unit/module in the communication apparatus, refer to the foregoing descriptions. Detailed descriptions are appropriately omitted herein.

It should be understood that the communication apparatus in FIG. 14 may be a terminal device, or may be a chip or an integrated circuit applicable to the terminal device. When the communication apparatus 1400 is a chip, the chip includes a processor, a memory, and a transceiver. The transceiver may be an input/output circuit or a communication interface. The processor may be a processing module, a microprocessor, or an integrated circuit that is integrated in the chip. A sending operation performed by the terminal device in the foregoing method embodiments may be understood as an output of the chip. A receiving operation performed by the terminal device in the foregoing method embodiments may be understood as an input of the chip.

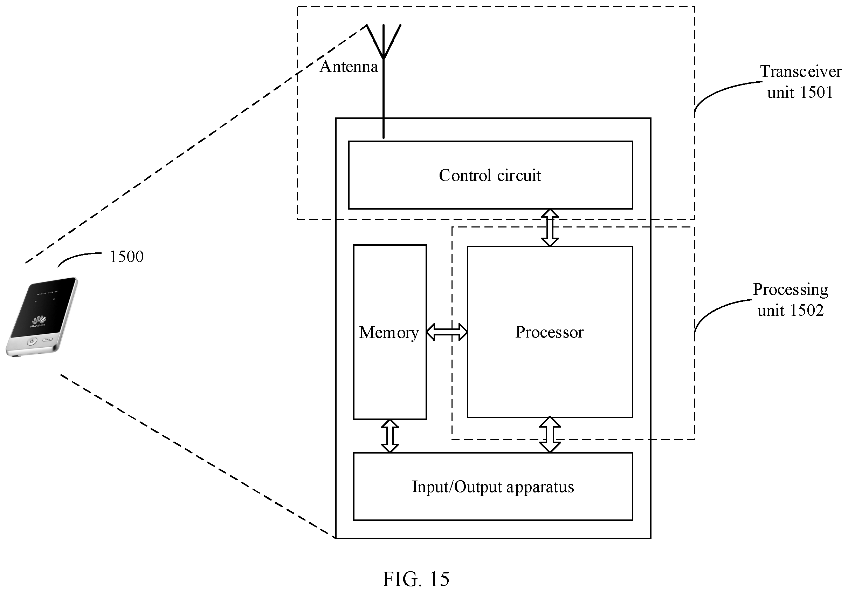

For example, the communication apparatus is a terminal device. FIG. 15 is a diagram of a structure of a terminal device according to an embodiment of this application. For ease of understanding and illustration, in FIG. 15, a mobile phone is used as an example of the terminal device. FIG. 15 shows only main components of the terminal device. The terminal device 1500 shown in FIG. 15 includes a processor, a memory, a control circuit, and an antenna. Optionally, the terminal device may further include an input/output apparatus. It should be understood that the control circuit may be disposed in the processor, or may be located outside the processor and exists independently. This is not limited in this embodiment of this application. The processor is mainly configured to process a communication protocol and communication data, control the entire terminal device, execute a software program, and process data of the software program, for example, configured to support the terminal device in performing actions described in the foregoing method embodiment. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 15 shows only one memory and one processor. In an actual terminal device, there may be a plurality of processors and memories. The memory may also be referred to as a storage medium, a storage device, or the like. This is not limited in embodiments of this application. It should be understood that the memory may be integrated in the processor, or may be located outside the processor and exists independently. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 15. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In this embodiment of this application, the control circuit and the antenna that has transmitting and receiving functions may be considered as a transceiver unit 1501 of the terminal device 1500, for example, configured to support the terminal device in performing the transmitting and receiving functions performed by the terminal device in the method embodiments shown in FIG. 4 to FIG. 13. A processor having a processing function is considered as a processing unit 1502 of the terminal device 1500, and corresponds to the processing unit 1410 in FIG. 14. As shown in FIG. 15, the terminal device 1500 includes the transceiver unit 1501 and the processing unit 1502. The transceiver unit may also be referred to as a transceiver device, a transceiver, a transceiver unit, or the like, and the transceiver unit corresponds to the transceiver unit 1420 in FIG. 14. Optionally, a component that is in the transceiver unit 1501 and that is configured to implement the receiving function may be considered as a receiving unit, and a component that is in the transceiver unit 1501 and that is configured to implement the sending function may be considered as a sending unit. In other words, the transceiver unit 1501 includes the receiving unit and the sending unit. The receiving unit may also be referred to as a receiver, an input port, a receiving circuit, or the like. The sending unit may be referred to as a transmitter machine, a transmitter, a transmitting circuit, or the like. It may be understood that the transceiver unit may also be an interface circuit.

The processing unit 1502 may be configured to execute instructions stored in the memory, to control the transceiver unit 1501 to receive a signal and/or transmit a signal, and implement functions of the terminal device in the foregoing method embodiments. In an implementation, the functions of the transceiver unit 1501 may be implemented through a transceiver circuit or a dedicated transceiver chip.

It should be understood that the terminal device 1500 shown in FIG. 15 can implement each process related to the terminal device in the method embodiments of FIG. 4 to FIG. 13. Operations and/or functions of modules in the terminal device 1500 are used to implement corresponding procedures in the foregoing method embodiments. For details, refer to the descriptions in the foregoing method embodiments. To avoid repetition, detailed descriptions are properly omitted herein.

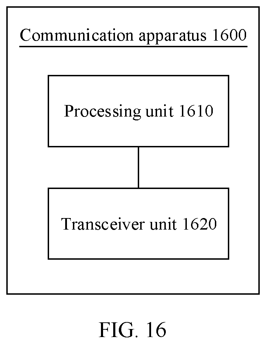

FIG. 16 is a diagram of a structure of a communication apparatus 1600 according to an embodiment of this application. The apparatus 1600 may include a processing unit 1610 and a transceiver unit 1620.

The communication apparatus 1600 provided in this embodiment of this application may correspond to processes performed by the network device in the method embodiments in FIG. 4 to FIG. 13. For a function of each unit/module in the communication apparatus, refer to the foregoing descriptions. Detailed descriptions are appropriately omitted herein.

It should be understood that the communication apparatus in FIG. 16 may be a network side device, or may be a chip or an integrated circuit that may be used in the network device side. When the communication apparatus 1600 is a chip, the chip includes a processor, a memory, and a transceiver. The transceiver may be an input/output circuit or a communication interface. The processor may be a processing module, a microprocessor, or an integrated circuit that is integrated in the chip. A sending operation performed by the terminal device in the foregoing method embodiments may be understood as an output of the chip. A receiving operation performed by the terminal device in the foregoing method embodiments may be understood as an input of the chip.

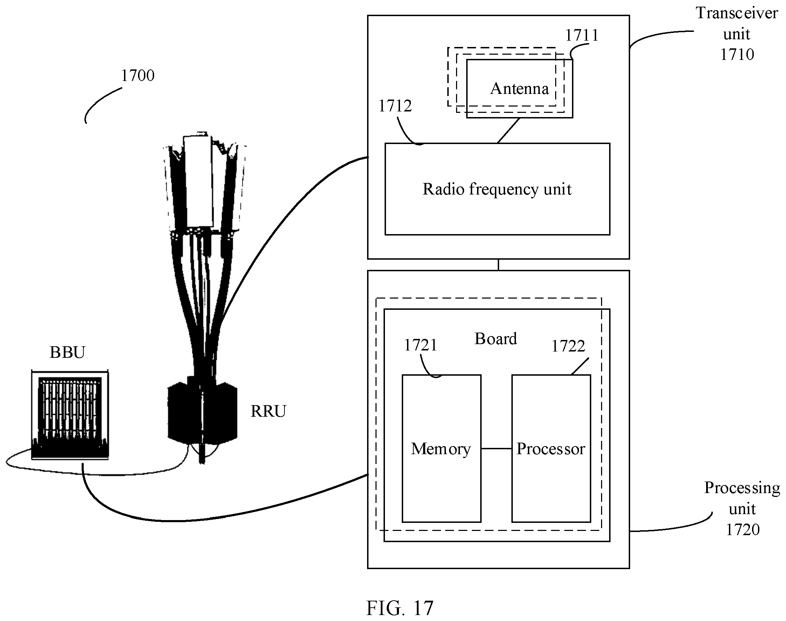

FIG. 17 is a diagram of a structure of a network device according to an embodiment of this application.

The network device 1700 includes one or more radio frequency units such as a remote radio unit (remote radio unit, RRU) 1710 and one or more baseband units (baseband unit, BBU) (which may also be referred to as a digital unit, DU) 1720. The RRU may be referred to as a transceiver unit 1710, and corresponds to the transceiver unit 1620 in FIG. 16. Optionally, the transceiver unit may also be referred to as a transceiver, a transceiver circuit, a transceiver device, or the like, and may include at least one antenna 1711 and a radio frequency unit 1712. The RRU is mainly configured to send and receive a radio frequency signal, and perform conversion between the radio frequency signal and a baseband signal. The BBU is mainly configured to perform baseband processing, control the base station, and so on. The RRU and the BBU may be physically disposed together, or may be physically separated, namely, a distributed base station. It may be understood that the transceiver unit may also be an interface circuit.

The BBU 1720 is a control center of a base station, may also be referred to as a processing unit 1720, may correspond to the processing unit 1610 in FIG. 16, and is mainly configured to complete a baseband processing function.

In an example, the BBU 1720 may include one or more boards, and a plurality of boards may jointly support a radio access network (such as an LTE network) of a single access standard, or may separately support radio access networks (such as an LTE network, a 5G network, or another network) of different access standards. The BBU 1720 further includes a memory 1721 and a processor 1722. The memory 1721 is configured to store necessary instructions and necessary data. The processor 1722 is configured to control the base station to perform necessary actions. It should be understood that the memory may be integrated in the processor, or may be located outside the processor and exists independently. This is not limited in this embodiment of this application. The memory 1721 and the processor 1722 may serve the one or more boards. In other words, a memory and a processor may be disposed on each board. Alternatively, a plurality of boards may share a same memory and a same processor. In addition, a necessary circuit may further be disposed on each board.

It should be understood that the network device 1700 shown in FIG. 17 can implement each process related to the network device in the method embodiments of FIG. 4 to FIG. 13. Operations and/or functions of modules in the network device 1700 are used to implement corresponding procedures in the foregoing method embodiments. For details, refer to the descriptions in the foregoing method embodiments. To avoid repetition, detailed descriptions are properly omitted herein.

An embodiment of this application further provides a processing unit, including a processor and an interface, where the processor is configured to perform the communication method in any one of the foregoing method embodiments.

It should be understood that the processing unit may be a chip. For example, the processing unit may be a field-programmable gate array (field-programmable gate array, FPGA), may be an application-specific integrated circuit (application-specific integrated circuit, ASIC), may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), or may be a programmable logic device (programmable logic device, PLD) or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct Rambus RAM, DR RAM). It should be noted that the memory of the systems and methods described in this specification includes but is not limited to these and any memory of another proper type.

An embodiment of this application further provides a communication system, including the foregoing network device and terminal device.

An embodiment of this application further provides a computer-readable medium. The computer-readable medium stores a computer program, and when the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

A corresponding module or unit performs a corresponding step. For example, a transmitting module (a transmitter) performs a transmitting step in the method embodiment, a receiving module (a receiver) performs a receiving step in the method embodiment, and steps other than transmitting and receiving may be performed by a processing module (a processor). For a function of a specific module, refer to a corresponding method embodiment. The sending module and the receiving module may form a transceiver module, and the transmitter and the receiver may form a transceiver, to jointly implement a receiving/sending function. There may be one or more processors.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate: a, b, c, a-b, a-c, b-c, or a-b-c, where a, b, and c may be singular or plural.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam measurement method, comprising:
receiving indication information, wherein the indication information indicates at least one beam group among a plurality of beam groups, and a plurality of beams used for beam measurement are divided into the plurality of beam groups;
receiving a reference signal transmitted by using the at least one beam group, wherein the reference signal is used to determine measurement feedback information; and
sending the measurement feedback information.

2. A beam measurement method, comprising:
sending indication information, wherein the indication information indicates at least one beam group among a plurality of beam groups, and a plurality of beams used for beam measurement are divided into the plurality of beam groups;
sending a reference signal by using the at least one beam group, wherein the reference signal is used to determine measurement feedback information; and
receiving the measurement feedback information.

3. The method according to claim 1, further comprising:
receiving configuration information, wherein the configuration information comprises beam measurement set information and/or beam grouping information, the beam measurement set information indicates the plurality of beams used for beam measurement, and the beam grouping information indicates group numbers of the plurality of beam groups.

4. The method according to claim 2, further comprising:
sending configuration information, wherein the configuration information comprises beam measurement set information and/or beam grouping information, the beam measurement set information indicates the plurality of beams used for beam measurement, and the beam grouping information indicates group numbers of the plurality of beam groups.

5. The method according to claim 3 or 4, wherein
the at least one beam group comprises a first beam group and a second beam group, wherein the first beam group is used to measure signal strength, and the second beam group is used to measure interference strength.

6. The method according to claim 5, wherein
the indication information indicates a group number of the first beam group and a group number of the second beam group.

7. The method according to claim 5, wherein the configuration information further comprises beam angle information, and the beam angle information comprises a zenith angle and/or an azimuth angle of each beam; and
beams in each of the plurality of beam groups have a same zenith angle range and/or a same azimuth angle range.

8. The method according to claim 7, wherein the indication information indicates a group number of the first beam group and a beam-angle difference threshold; and
the method further comprises: determining the second beam group based on the first beam group, the beam-angle difference threshold, and the beam angle information.

9. The method according to claim 7, further comprising:
determining the second beam group based on the first beam group, a beam-angle difference threshold, and the beam angle information.

10. The method according to claim 8 or 9, wherein the determining the second beam group comprises:
determining, as the second beam group, a beam group, among the plurality of beam groups, whose angle difference from the first beam group is greater than the beam-angle difference threshold.

11. The method according to claim 10, wherein the angle difference comprises an angle difference between an angle center of the first beam group and an angle center of the second beam group; and
the angle center of the first beam group or the angle center of the second beam group is obtained by calculating an arithmetic mean, a geometric mean, a harmonic mean, a square mean, or a moving average of angles of beams in the first beam group or the second beam group.

12. The method according to claim 5, wherein the configuration information further comprises spatial domain grid information, and the spatial domain grid information indicates a coverage area range of each beam mapped onto the ground; and
beams in each of the plurality of beam groups have adjacent coverage area ranges.

13. The method according to claim 12, wherein
the indication information indicates a group number of the first beam group and a beam distance difference threshold; and
the method further comprises: determining the second beam group based on the first beam group, the beam distance difference threshold, and the spatial domain grid information.

14. The method according to claim 12, further comprising:
determining the second beam group based on the first beam group, a beam distance difference threshold, and the spatial domain grid information.

15. The method according to claim 13 or 14, wherein the determining the second beam group comprises:
determining, as the second beam group, a beam group, among the plurality of beam groups, whose distance difference from the first beam group is greater than the beam distance difference threshold.

16. The method according to claim 15, wherein the distance difference comprises a distance difference between a coverage area center of the first beam group and a coverage area center of the second beam group; and
the coverage area center of the first beam group or the coverage area center of the second beam group is obtained by calculating an arithmetic mean, a geometric mean, a harmonic mean, a square mean, or a moving average of coverage areas of the first beam group or the second beam group.

17. The method according to any one of claims 12 to 16, wherein the spatial domain grid information comprises coverage area update information; and
the coverage area update information indicates a portion of a current coverage area of each beam mapped to the ground that changes relative to a previous coverage area of the beam mapped to the ground.

18. The method according to any one of claims 5 to 17, wherein the measurement feedback information comprises a beam number of a reported beam in the first beam group or the second beam group.

19. A beam measurement apparatus, comprising a unit configured to perform the method according to any one of claims 1 to 18.

20. A computer-readable storage medium, wherein the computer-readable storage medium stores a computer program, and when the computer program is executed by a computer, the computer is enabled to perform the method according to any one of claims 1 to 18.

21. A chip, wherein the chip comprises a processor and a data interface, and the processor reads, through the data interface, instructions stored in a memory, to perform the method according to any one of claims 1 to 18.

22. A communication apparatus, comprising a processor, wherein the processor is configured to run a computer program, to enable the communication apparatus to perform the method according to any one of claims 1 to 18.

23. A computer program product comprising instructions, wherein when the computer program product is run on a computer, the computer is enabled to perform the method according to any one of claims 1 to 18.
